# EUROPEAN PATENT APPLICATION

(11) **EP 3 985 578 A1**
(43) Date of publication of application: **20.04.2022**
(21) Application number: 20823331.2
(22) Date of filing: 15.06.2020
(51) Int. Cl.: G06N 20/00

(54) **METHOD AND SYSTEM FOR AUTOMATICALLY TRAINING MACHINE LEARNING MODEL**

(30) Priority: 14.06.2019 CN 201910514735
(71) Applicant: The Fourth Paradigm (Beijing) Tech Co Ltd, Beijing 100085 (CN)
(72) Inventor: LUO, Yuanfei, Beijing 100085 (CN); TU, Weiwei, Beijing 100085 (CN); CAO, Rui, Beijing 100085 (CN)
(74) Representative: Müller Hoffmann & Partner
(86) International application number: PCT/CN2020/096084
(87) International publication number: WO 2020/249125

(57) **Abstract**

A method and a system for automatically training a machine learning model. The method comprises: obtaining a data set comprising multiple data records (S310); determining a feature engineering strategy for the data set by means of meta-learning (S320); generating features related to each data record in the data set using the determined feature engineering strategy (S330); constructing machine learning samples on the basis of at least the generated features (S340); and using the constructed machine learning samples to train a machine learning model on the basis of the automatically obtained hyper-parameter values (S350).

## Description

### CROSS-REFERENCE TO RELATED APPLICATION

This application claims the priority to Chinese Patent Application with the application No. 201910514735.9, the filing date of June 14, 2019, and the title of "METHOD AND SYSTEM FOR AUTOMATICALLY TRAINING MACHINE LEARNING MODEL", wherein the disclosure of the above application is incorporated herein by references.

### TECHNICAL FIELD

The present disclosure generally relates to a field of artificial intelligence, and more particularly, relates to a method and system for automatically training a machine learning model.

### BACKGROUND

With the emergence of massive amounts of data, artificial intelligence technology has developed rapidly, and in order to mine value from large amounts of data, relevant personnel not only need to be proficient in artificial intelligence technology (especially machine learning technology), but also need to be very familiar with specific scenarios to which the machine learning technology is applied, for example, image processing, voice processing, text processing, and service decision fields such as automatic control, financial services, Internet advertising, etc. For example, in machine learning, model training usually requires participation of a large number of machine learning experts (including feature engineering strategy selection and model hyper-parameter adjustment etc. during the training process), and the effect of the trained model often depends on personal experience about the model training of the machine learning experts and their familiarity with the specific application scenarios of the model or the related services. If the relevant personnel have insufficient knowledge of the specific services or insufficient modeling experience, it is easy to lead to poorer model effects. Accordingly, the existing model training methods will not only consume a lot of labor costs, but also lead to a higher threshold for machine learning. In addition, due to the dependence on the personal experience and service familiarity of the relevant personnel, the trained model effect may not be objective to reflect the real service laws, and these all bring great difficulties to the industrial application prospects of machine learning technology. For this reasons, technicians hope to reduce thresholds of the model training and application while ensuring the model training effect by using technical means.

### SUMMARY

According to exemplary embodiments of the present disclosure, a method, executed by at least one computing device, for automatically training a machine learning model is provided, and the method may include: acquiring a data set including multiple data records; determining a feature engineering strategy for the data set through meta-learning; generating features related to each data record in the data set using the determined feature engineering strategy; constructing a machine learning sample at least based on the generated features; and training the machine learning model using the constructed machine learning sample, based on automatically obtained hyper-parameter values.

According to another exemplary embodiment of the present disclosure, a computer readable storage medium storing instructions is provided, wherein the instructions, when executed by at least one computing device, cause the at least one computing device to execute the above method.

According to another exemplary embodiment of the present disclosure, a system including at least one computing device and at least one storage device storing instructions is provided, wherein the instructions, when executed by the at least one computing device, cause the at least one computing device to perform following steps for automatically training a machine learning model, the steps including: acquiring a data set including multiple data records; determining a feature engineering strategy for the data set through meta-learning; generating features related to each data record in the data set using the determined feature engineering strategy; constructing a machine learning sample at least based on the generated features; and training the machine learning model using the constructed machine learning sample, based on automatically obtained hyper-parameter values. According to another exemplary embodiment of the present disclosure, a system for automatically training a machine learning model is provided, and the system may include: a data set acquisition device configured to acquire a data set including multiple data records; a feature engineering strategy determination device configured to determine a feature engineering strategy for the data set through meta-learning; a feature generation device configured to generate features related to each data record in the data set using the determined feature engineering strategy; a sample construction device configured to construct a machine learning sample at least based on the generated features; and a training device configured to train the machine learning model using the constructed machine learning sample, based on automatically obtained hyper-parameter values.

The method and system for automatically training the machine learning models according to the exemplary embodiments of the present disclosure may determine the feature engineering strategy through meta-learning, generate sample features using the determined feature engineering strategy to construct the machine learning sample, and train the machine learning models using the constructed machine learning sample based on the automatically obtained hyper-parameters, so that the dependence of the model training on the personal experience of machine learning experts is reduced, and also, it is unnecessary for relevant service personnel to have an in-depth understanding of the services. This not only reduces the threshold for the application of the machine learning, but also improves the model training efficiency while ensuring the training effect.

### BRIEF DESCRIPTION OF THE DRAWINGS

These and/or other aspects and advantages of the present disclosure will become apparent and easily understood from the following detailed description for the embodiments of the present disclosure, taken in conjunction with the accompanying drawings in which:
FIG. 1 illustrates a block diagram of a system for automatically training a machine learning model according to an exemplary embodiment;
FIG. 2 illustrates a schematic diagram of generating features using a gradient boosting decision tree model according to an exemplary embodiment;
FIG. 3 illustrates a flow chart of a method for automatically training a machine learning model according to an exemplary embodiment; and
FIG. 4 illustrates a flow chart of an example of the method for automatically training the machine learning model according to an exemplary embodiment.

### DETAILED DESCRIPTION

Inorder to enable those skilled in the art to understand the present disclosure better, the exemplary embodiments of the present disclosure will be described in detail with reference to the accompanying drawings and the specific implementation modes. It should be explained here that "at least one of several items" appearing in the present disclosure all means to include these three parallel situations of "any one of the several items", "a combination of any multiple of the several items", and "the totality of the several items". For example, "including at least one of A and B" for example includes the following three parallel situations: (1) including A; (2) including B; and (3) including A and B. For another example, "executing at least one of step 1 and step 2" for example represents the following three parallel situations: (1) executing step 1; (2) executing step 2; and (3) executing step 1 and step 2.

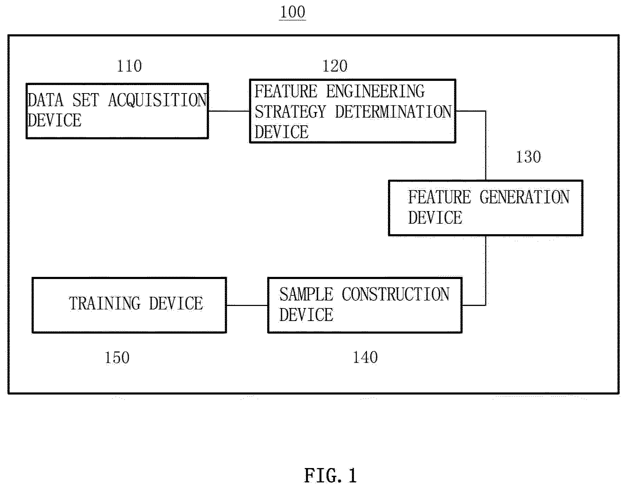

FIG. 1 is a block diagram illustrating a system 100 for automatically training a machine learning model (hereinafter referred to as "automatic model training system" for the convenience of description) according to an exemplary embodiment. As shown in FIG. 1, the automatic model training system 100 may include a data set acquisition device 110, a feature engineering strategy determination device 120, a feature generation device 130, a sample construction device 140 and a training device 150.

It needs to be explained that the machine learning model provided by the present disclosure may be applied to predicting image category, text category, speech emotion, fraudulent transaction, advertising click-through rate and the like, so that the prediction result may be directly used as a basis for decision-making or further combined with other rules to become a basis for decision-making.

Furthermore, scenarios to which the machine learning model may be applied may include but are not limited to: image processing scenarios, voice processing scenarios, text processing scenarios, automatic control scenarios, financial service scenarios, Internet advertising scenarios, search scenarios, abnormal behavior detection scenarios, medical service scenarios, and municipal service scenarios.

The image processing scenario includes character recognition (OCR), face recognition, object recognition, image classification and the like. More specifically, for example, OCR may be applied to bill (such as invoice) recognition, handwriting recognition, etc., face recognition may be applied to security and other fields, object recognition may be applied to traffic sign recognition in autonomous driving scenarios, and image classification may be applied to "photo shopping", "finding the same style", etc. on e-commerce platforms.

The voice processing scenario includes products capable of performing man-machine interaction through voice, such as voice assistants of mobile phones (e.g., Siri of Apple mobile phone), smart speakers and the like.

The text processing scenario includes examination of text (e.g., contracts, legal documents, customer service records, etc.), spam identification (e.g., spam SMS identification), text classification (emotions, intentions, and topics, etc.) and the like.

The automatic control scenario includes prediction of mine group adjustment operations, prediction of wind turbine generator set adjustment operations, prediction of air conditioning system adjustment operations and the like. Specifically, a set of adjustment operations with high mining rate may be predicted for the mine group, a set of adjustment operations with high power generation efficiency may be predicted for the wind turbine generator set, and a set of adjustment operations that satisfy demands while saving energy consumption may be predicted for the air conditioning system.

The financial service scenario includes marketing (e.g., coupon usage prediction, advertising click behavior prediction, user portrait mining, etc.), and customer acquisition, anti-fraud, anti-money laundering, underwriting and credit scoring and commodity price predication. For example, financial service data is collected, features related to the financial data are generated according to the feature engineering strategy, prediction samples are constructed at least based on the generated features, a prediction result provided by a machine learning model for the prediction sample is acquired, and financial risk control, marketing or collection is performed according to the prediction result.

The Internet advertising scenario includes: recommendation for news, advertisements, music, consultation, videos (e.g., movies), physical products (food, electronic products, etc.) and financial products (e.g., finance management, insurance, etc.).

The search scenario includes web search, image search, text search, video search, and the like.

The abnormal behavior detection scenario includes detection of abnormal power consumption behavior of State Grid customers, detection of network malicious traffic, detection of abnormal behavior in an operation log and the like.

The medical service scenario includes: disease screening and prevention, personalized health management, auxiliary diagnosis and the like.

Municipal areas include: social governance and regulatory enforcement, resources environment and facilities management, industrial development and economic analysis, public services and people's livelihood guarantee, smart cities (deployment and management of various urban resources such as public transportation, online car-hailing, sharing bicycles, etc.).

Specifically, the data set acquisition device 110 may acquire a data set including multiple data records. Here, the data set may relate to at least one of image data, voice data, text data and service data, but not limited hereto. For example, the data record may relate to various information for characterizing an image signal or transformed forms of the various information, or the data record may relate to various information for characterizing a speech signal or transformed forms of the various information, or the data record may relate to various components for characterizing text composition or transformed forms of the various components. For another example, the data record may relate to various attributes associated with a service in real services (e.g., marketing, advertising, recommendation, risk control, automatic control, etc.). In fact, the data set may relate to various data that is objectively generated in any service scenario, such as, data related to a behavior of a user clicking on a product in an online shopping mall, data related to a behavior of a user applying for a loan at a bank, and so on. In addition, each data record in the data set may include multiple data attribute fields (e.g., a user's age, occupation, personal preference, login time, commodity price, color, etc.), and as an example, from an aspect of form, each service data record may be a piece of form data. Here, each data record may include at least one of a discrete feature (e.g., occupation=teacher) and a consecutive feature (e.g., age=17), and the data record may relate to at least one of a time feature (e.g., time to log in to an application = 8:30 a.m.) and a non-time feature.

In addition, the data records in the above data set may directly come from a data collecting device of an image photographing device or a microphone, various sensors, Internet media etc., or may come from the same or different data sources of data providers, the Internet (e.g., social networking sites), mobile operators, App operators, courier companies, credit institutions etc., and multiple data records from different data sources may be spliced to constitute a data record containing more information. For example, in addition to acquiring information data records (including attribute information fields such as income, academic qualification, position, and asset status) filled in when a customer applies to a bank to open a credit card, as an example, the data set acquisition device 110 may further acquire other data records of the customer in the bank, such as loan records, daily transaction data, etc., and these acquired data records may be further spliced into a complete data record. Alternatively, the data set acquisition device 110 may splice multiple forms recording different data records into a wide table form through common attribute fields among them as the above data set (wherein, one form data record in the wide table form corresponds to one data record in the above data set).

As an example, the data set acquisition device 110 may acquire data manually, semi-automatically or fully automatically, or process the acquired data so that the processed data record has an appropriate format or form (e.g., in a form of a form data record). Here, the data set acquisition device 110 may receive data records manually input by the user through an input device (e.g., a workstation), or the data set acquisition device 110 may systematically fetch data records from a data source in a fully automatic manner, for example, systematically request the data source and obtain the requested data from a response by a timer mechanism implemented by software, firmware, hardware, or a combination of them, or may also automatically acquire data under a condition of manual intervention, for example, request to acquire data upon receiving a specific user input. Every time the data is acquired, preferably, the data set acquisition device 110 may store the captured data in a non-volatile memory. As an example, a data warehouse may be used to store acquired raw data and processed data records.

However, it should be understood that the present disclosure does not make any limitation to a type, a data form, an acquisition method, sources and the like of the data set.

The feature engineering strategy determination device 120 may determine a feature engineering strategy for the data set through meta-learning. Generally, different data sets may have different characteristics (e.g., different feature distributions), and experience information that is conducive to learning contained in the data set may be better extracted by selecting appropriate feature engineering strategies for data sets with different characteristics. As an example, these information may help service decisions. Here, the meta-learning may be a process of obtaining the feature engineering strategy suitable for the data set by learning (e.g., statistically analyzing, machine learning, etc.) the data set. For example, the feature engineering strategy determination device 120 may analyze the data set to obtain a meta feature that reflects overall characteristics of the data set, and determine the feature engineering strategy for the data set based on the obtained meta feature. Here, the meta feature is a feature that reflects overall characteristics of the data set, rather than reflecting characteristics of a single data record in the data set, thus, it is different from the discrete feature or consecutive feature itself that is included in respective data record. As an example, the feature engineering strategy determination device 120 may analyze the data set to obtain statistic information regarding at least one of the number of data records included in the data set, types of features included in the data record, the number of the features, and values of the features, as a meta feature. Here, for example, the statistic information regarding types of the features included in the data record may be whether a feature included in a data record is a discrete feature or a consecutive feature, whether there is a time feature in the data record, whether there are multiple time features in the data record and the like. The statistic information regarding the number of the features included in a data record may be the number of the discrete features, the number of the consecutive features, the number of the time features, comparison between the number of the discrete features and the number of the consecutive features (e.g., the number of discrete features being greater than the number of the consecutive features, or the number of the consecutive features is greater than the number of the discrete features) included in the data record and the like, but is not limited hereto. The statistic information regarding values of the features included in a data record may be the number of the discrete features with values and the number of the consecutive features with values, the number of the discrete features with no value and the number of consecutive features with no value, or a ratio of the number of the discrete features with values to the number of all the discrete features or the like, but is not limited hereto.

According to the exemplary embodiment of the present disclosure, the meta feature may include at least one of: the number of the data records included in the data set, the number of discrete features included in the data record, the number of consecutive features included in the data record, whether there is a time feature in the data record, the number of time features included in the data record, a filling degree of each discrete feature, a filling degree of each consecutive feature, an average filling degree of all the discrete features and an average filling degree of all the consecutive features, a mean, variance, median, maximum or minimum value of respective consecutive feature values, or the number of different values of respective discrete features, or a result obtained by performing comprehensive and statistical analysis on the above respective items, but is not limited hereto, as long as it can reflect the overall characteristics of the data set. Here, the filling degree of each discrete feature may refer to a ratio of data records having values of the discrete feature to all data records in the data set. The filling degree of each consecutive feature may refer to a ratio of data records having values of the consecutive feature to all data records in the data set. The average filling degree of all discrete features may refer to an average value of filling degrees of all the discrete features included in a data record. The average filling degree of all consecutive features may refer to an average value of filling degrees of all the consecutive features included in a data record.

According to the exemplary embodiment, the feature engineering strategy determination device 120 may automatically determine the feature engineering strategy for the data set based on the obtained meta feature, according to correspondence relationship between the meta feature and the feature engineering strategy. For example, through a large number of engineering analysis and experiments, the correspondence relationship between different meta features and the feature engineering strategies corresponding thereto may be pre-established. Therefore, after the meta feature that reflects the overall characteristics of the data set is obtained by analyzing the data set, the feature engineering strategy corresponding to the obtained meta feature may be automatically determined as the feature engineering strategy for the data set based on the pre-established correspondence relationship between the meta features and the feature engineering strategies.

Alternatively, according to another exemplary embodiment, the feature engineering strategy determination device 120 may determine the feature engineering strategy for the data set using another machine learning model based on the obtained meta feature. For example, the another machine learning model may be a clustering model or other prediction models that are pre-trained to perform prediction, but is not limited hereto.

Specifically, as an example, the feature engineering strategy determination device 120 may determine a historical data set that is similar to the data set acquired by the data set acquisition device 110 and has a corresponding model training result using a clustering model based on the obtained meta feature, and determine the feature engineering strategy corresponding to the historical data set as the feature engineering strategy for the data set. That is to say, the feature engineering strategy determination device 120 may determine the historical data set similar to the data set based on the acquired meta feature of the data set (e.g., if the meta features of the two data sets are similar, the two data sets may be considered similar) by means of the clustering model, and if the effect of the machine learning model trained with the historical data set has been verified to satisfy a predetermined condition, the historical feature engineering strategy for the historical data set may be determined as the feature engineering strategy for the data set. Here, the clustering model may be, for example, K-means, KNN, etc., but is not limited hereto

As another example, the feature engineering strategy determination device 120 may input a prediction sample constituted based on the obtained meta feature to a prediction model as the another machine learning model, and use a prediction result of the prediction model for the prediction sample as the feature engineering strategy for the data set. Here, the prediction model may be pre-trained to predict the feature engineering strategy corresponding to the meta feature based on the meta feature. For example, the another machine learning model described here my be pre-trained by: constructing the training sample based on the meta feature, using the feature engineering strategy corresponding to the meta feature as a category label of the training sample, and then training the another machine learning model using the constructed training sample. Subsequently, the trained another machine learning model may perform, as the prediction model, the prediction with respect to the prediction sample constructed based on the obtained meta feature to provide the corresponding prediction result, wherein the prediction result may directly indicate the feature engineering strategy corresponding to the meta feature.

According to the exemplary embodiment, the feature engineering strategy determination device 120 may, when automatically determining the feature engineering strategy based on the obtained meta feature, in response to the discrete features being stronger than the consecutive features in distribution, determine the feature engineering strategy for the data set as: discretizing the consecutive features to obtain discretization features, and searching Cartesian product combinations of original discrete features and the discretization features for a discrete feature combination that is beneficial to a training effect of the model, as the generated feature related to each data record. Here, "the discrete features being stronger than the consecutive features in distribution" may be a meta feature reflecting the overall characteristics of the data set. For example, if the number of the discrete features is greater than the number of the consecutive features or the average filling degree of all the discrete features is greater than the average filling degree of all the consecutive features, it may be considered that the discrete features are stronger than the consecutive features in distribution, but a standard for measuring whether the discrete features are stronger than the consecutive features in distribution is not limited to the above method. As an example, in the case where the analyzed meta feature indicates that the discrete features are stronger than the consecutive features in distribution, the feature engineering strategy determination device 120 may discretize the consecutive feature included in the data record to obtain new discrete features (e.g., the consecutive feature may be discretized by binning to obtain the discrete features), train a logistic regression model based on a sample at least including original discrete features in each data record and the obtained new discrete features, and search Cartesian product combinations of the original discrete features and the discretization features for a discrete feature combination that is beneficial to the model training effect of the logistic regression model, as the generated feature related to the each data record. For example, if the machine learning model to be automatically trained in the present disclosure is a neural network model, and each layer of the neural network model is the logistic regression model, the discrete feature combination that is beneficial to the model training effect of the logistic regression model will be also beneficial to the model training effect of the neural network model, thus, such a discrete feature combination may be generated as a feature included by the training sample for training the neural network model. Here, when the discrete feature combination that is beneficial to the model training effect of the logistic regression model is searched in the Cartesian product combinations of the original discrete features and the discretization features, the combined feature may be respectively added to the original training sample to train the logistic regression model, then it is determined whether the model effect of the logistic regression model trained using the training sample in which the combined feature is added is improved compared with the model effect of the logistic regression model trained using the training sample before the combined feature is added, and if the model effect of the logistic regression model trained using the training sample in which the combined feature is added is improved, it is considered that the combined feature is the discrete feature combination that is beneficial to the model training effect, and thus may be used as the generated feature related to each data record. It needs to be explained that the method of generating the discrete feature combination by the above machine learning method is merely an example, and the combined feature may be generated by other machine learning methods. In addition, the model used in the manner of generating the discrete feature combination in accordance with the machine learning manner is not limited to the logistic regression model, and may be further applied to other machine learning models.

Alternatively, in response to the consecutive features being stronger than the discrete features in distribution, the feature engineering strategy determination device 120 may determine the feature engineering strategy for the data set as: training a gradient boosting decision tree model using the data set, and using a serial number of a leaf node of each decision tree where the sample constituted based on each data record falls as the generated feature related to each data record. Here, "the consecutive features being stronger than the discrete features in distribution" may be a meta feature reflecting the overall characteristics of the data set. For example, if the number of the consecutive features is greater than the number of the discrete features or the average filling degree of all the consecutive features is greater than the average filling degree of all the discrete features, it may be considered that the consecutive features are stronger than the discrete features in distribution, but a standard for measuring whether the consecutive features are stronger than the discrete features in distribution is not limited to the above method. When the data set is used to train the gradient boosting decision tree model, the training sample may be constructed based on the consecutive features included by each data record, or the training sample may be constructed based on the consecutive features included in each data record together with a small number of the discrete features. Here, the gradient boosting decision tree may include multiple decision trees with a same depth or different depths, and when the gradient boosting decision tree is trained, a difference between a prediction result of a previous tree for a sample and a real label of the sample is used as a label of the sample for training a next tree.

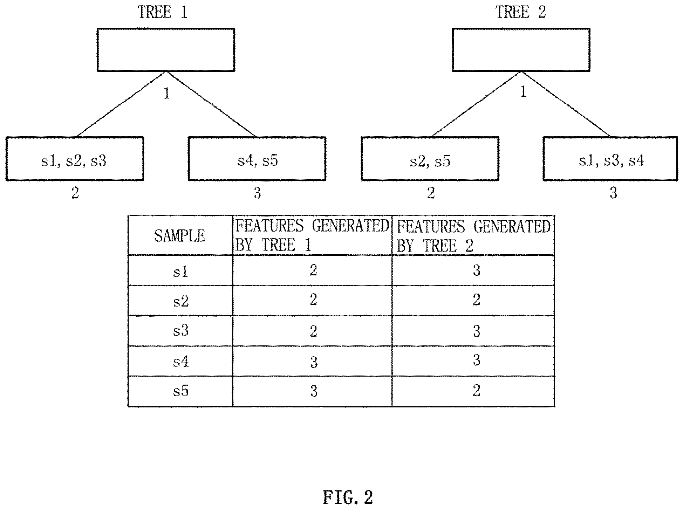

FIG. 2 illustrates a schematic diagram of generating features using the gradient boosting decision tree according to an exemplary embodiment. Referring to FIG. 2, in order for convenience of description, here it is assumed that the gradient boosting decision tree includes two trees of a depth of 2, and samples constructed for training the gradient boosting decision tree are s1, s2, s3, s4 and s5. If when a first tree (tree 1) is trained, samples s1, s2 and s3 fall on a leaf node numbered 2 of tree 1, and samples s4 and s5 fall on a leaf node numbered 3 of tree 1, and when a second tree (tree 2) is trained, samples s2 and s5 fall on a leaf node numbered 2 of tree 2, and samples s1, s3 and s4 fall on a leaf node numbered 3 of tree 2,then as shown in a table of FIG. 2, the serial number 2 of the leaf node of tree 1 where the sample s1 falls and the serial number 3 of the leaf node of tree 2 where the sample s1 falls are used as generated features related to the data record corresponding to the sample s1. Similarly, the serial number 2 of the leaf node of tree 1 where the sample s3 falls and the serial number 3 of the leaf node of tree 2 where the sample s3 falls are used as generated features related to the data record corresponding to the sample s3. It needs to be explained that the leaf node may be numbered arbitrarily, and not limited to the numbering method in FIG. 2.

Alternatively, in response to there being the time feature in the data set, the feature engineering strategy determination device 120 may determine the feature engineering strategy for the data set as: sorting the multiple data records according to the time feature, and in a process of training a logistic regression model sequentially using the sorted data records, acquiring a sequence feature corresponding to a current data record based on a parameter item related to a model parameter of the logistic regression model as the generated feature related to each data record. Here, "there being the time feature in the data set" may be a meta feature reflecting the overall characteristics of the data set. Specifically, for example, after sorting the multiple data records according to the time feature, at least one data record that is sorted top according to the time feature may be first used to train the logistic regression model, and then the parameter item related to the model parameter of the trained logistic regression model is used as the sequence feature corresponding to the current data record that is sorted immediately after the at least one data record. Subsequently, the data record that is immediately after the at least one data record may be continuously used to update the logistic regression model, and the parameter item related to the model parameter of the currently updated logistic regression model is used as a sequence feature corresponding to the next data record after the data record. That is to say, the logistic regression model is continuously updated, and the parameter item related to the model parameter of the logistic regression model that is updated using the data record before the current data record is used as the sequence feature of the current data record. As an example, the parameter item related to the model parameter may include at least one of the model parameter itself, an operation result between the model parameters, and statistic information of the model parameter during a model updating process. For example, the operation result between the model parameters may be an operation result after performing predetermined operation (e.g., summation, averaging, etc.) among multiple model parameters of the same logistic regression model. In addition to using at least one of the model parameter and the operation result between the model parameters of the updated logistic regression model as the sequence feature, alternatively, since the model parameter varies continuously during the updating process of the logistic regression model, the statistic information of the model parameter during the model updating process may be also used as the sequence feature. Specifically, the statistic information may be, for example, a mean value, variance, standard deviation of at least one model parameter during the model updating process, but is not limited hereto. It needs to be explained that although the feature engineering strategy is determined here to acquire the sequence feature with the help of the parameter of the logistic regression model, the present disclosure is not limited hereto. Instead, the logistic regression model may be replaced with other machine learning models, or the sequence feature may be also acquired without the help of the machine learning model, and the sequence feature corresponding to the current data record may be acquired merely by performing the statistical analysis on the data record(s) before the current data record sorted according to the time feature.

Alternatively, in response to there being multiple time features in the data set, the feature engineering strategy determination device 120 may determine the feature engineering strategy for the data set as: generating, for each data record, the feature related to each data record by combing the multiple time features in pairs and then subtracting them. For example, it is assumed that the data record includes three time features t1, t2 and t3, tl-t2, t2-t3 and t3-tl may be used as the generated features related to each data record.

It needs to be explained that the above four feature engineering strategies may be combined, for example, if the obtained meta feature indicates there being the time feature in the data set, and also indicates the consecutive features being stronger than the discrete features in distribution, the feature engineering strategy determined in response to there being the time feature in the data set and the feature engineering strategy determined in response to the consecutive features being stronger than the discrete features in distribution are performed in combination. In addition, in addition to the method of determining the feature engineering strategy based on the meta feature, the feature engineering strategy determination device 120 may further combine other feature engineering methods, for example, principal component analysis (PCA), singular value decomposition (SVD) and neural network stacking (NN stacking) etc. are performed on the data record in the data set.

After the feature engineering strategy determination device 120 determines the feature engineering strategy, the feature generation device 130 may generate features related to each data record in the data set using the determined feature engineering strategy, that is, generate the features related to each data record in the data set in accordance with a feature generation method indicated in the determined feature engineering strategy.

As stated above, after the data set is acquired, the present disclosure may automatically determine the feature engineering strategy for the data set through the meta-learning, thereby getting rid of the personal experience and the familiarity of service scenarios of machine learning experts and relevant service personnel when determining the feature engineering strategy in the process of training the machine learning model. Thus, not only the automation of the entire model training is improved and the threshold of machine learning is reduced, but also it is possible to determine the feature engineering strategy for the data set more objectively through quantitative analysis, so that it is more advantageous for the subsequent training of the machine learning model with the features generated by the feature engineering strategy that is objectively determined.

The sample construction device 140 may construct a machine learning sample at least based on the generated features. As an example, the sample construction device 140 may construct the machine learning sample merely based on the generated features. Alternatively, the sample construction device 140 may also construct the machine learning sample based on both of the generated features and original features included in the data record, for example, the machine learning sample may be constructed by merging the generated features and the original features included in the data record.

The training device 150 may train the machine learning model using the machine learning sample constructed by the sample construction device 140 based on automatically obtained hyper-parameter values. For example, firstly, the training device 150 may use a part of all the constructed machine learning samples as a training sample set. Here, another part of all the machine learning samples may be used as a verification sample set used when verifying the model effect of the trained machine learning model. Secondly, the training device 150 may generate multiple sets of hyper-parameter values of hyper-parameters that affect the training of the machine learning model by automatically using different hyper-parameter generation strategies according to the number of training samples included in the training sample set. Subsequently, the training device 150 may train multiple machine learning models using the constructed machine learning sample based on each set of hyper-parameter values among the multiple sets of hyper-parameter values, respectively. Finally, the training device 150 may select several machine learning models with top-ranked model effects among the multiple trained machine learning models, and fuse the several selected machine learning models through a predetermined model fusion strategy to determine a finally trained machine learning model.

Next, it is first to describe, in detail, the process that the training device 150 generates multiple sets of hyper-parameter values of hyper-parameters that affect the training of the machine learning model by automatically using different hyper-parameter generation strategies according to the number of training samples included in the training sample set.

Generally, the smaller the number of training samples included in the data set, correspondingly the smaller a range of hyper-parameter values, and a relatively small computing resource is consumed for finding suitable hyper-parameters within the relatively small range of values, and it is also more likely to find the suitable hyper-parameters faster. Thus, in this case, the hyper-parameter may be generated by a random generation method. Specifically, in response to the number of the training samples included in the training sample set being less than or equal to a preset threshold, the training device 150 may generate multiple sets of hyper-parameter values of the hyper-parameters within a range of the hyper-parameter values corresponding to the number of the training samples. Alternatively, hyper-parameter values of partial hyper-parameters among the hyper-parameters may be pre-defined, and for remaining hyper-parameters, multiple sets of hyper-parameter values of the remaining hyper-parameters may be generated within the range of the hyper-parameter values corresponding to the number of the training samples. For example, if the number of the training samples is less than the preset threshold, partial hyper-parameters that have less affect on the model effect may be fixed according to prior experience, while for hyper-parameters that have greater affect on the model effect, multiple sets of hyper-parameter values of the remaining hyper-parameters may be generated within the range of the hyper-parameter values corresponding to the number of the training samples.

However, the larger the number of the training samples, the larger the corresponding range of the hyper-parameter values when generating the hyper-parameters, and correspondingly, since the range of the hyper-parameter values is larger, it is more difficult to fine the suitable hyper-parameter values therefrom, and the more computing resource will also be consumed for finding the suitable hyper-parameter values (the efficiency is relatively low). For this reason, in this disclosure, a concept of generating hyper-parameter values that may be used in any machine learning model training process is further proposed.

Specifically, in response to the number of the training samples included in the training sample set being greater than the preset threshold, the training device 150 may generate the multiple sets of hyper-parameter values of the hyper-parameters by: pre-defining hyper-parameter values of partial hyper-parameters among the hyper-parameters, and generating, for remaining hyper-parameters, multiple sets of hyper-parameter values of the remaining hyper-parameters by a combination method in which a method of randomly generating the hyper-parameter values within the range of the hyper-parameter values corresponding to the number of the training samples and a method of generating the hyper-parameter values using a Bayesian optimization model are combined. Here, the Bayesian optimization model is constructed to reflect relationship between a hyper-parameter value and a model effect corresponding thereto. It needs to be explained that although it is mentioned that the hyper-parameter values of the partial hyper-parameters are pre-defined here, multiple sets of hyper-parameter values of respective hyper-parameters may also be generated for all the hyper-parameters in accordance with the above combination method.

Next, the method of generating the multiple sets of hyper-parameter values of the remaining hyper-parameters in accordance with the combination method of the present disclosure will be further described in detail.

Firstly, the training device 150 may construct a sub training sample set by sampling the training samples in the training sample set. Here, the training device 150 sampling the training samples in the training sample set is not limited to constructing a sub training sample set merely by sampling once, but the training device 150 may also perform multiple times of sampling for the training samples in the training sample set to construct multiple sub training sample sets with different numbers of training samples, and among the multiple times of sampling, the sub training sample set obtained from the latter sampling includes more training samples than the sub training sample set obtained from the previous sampling.

According to the exemplary embodiment, the training device 150 may construct a sub training sample set by performing sub-sampling based on density for the training samples in the training sample set. Here, the sub-sampling based on the density may be sampling based on a distribution density of the training samples in a specific space, which may enable the sampled sub training sample set to reflect a distribution pattern of the samples in the entire training sample set better than random sampling. For example, the training device 150 may reduce dimensionality of the training samples in the training sample set to another dimension space, and construct the sub training sample set by sampling the training samples according to labels of the training samples and distribution density of the training samples in the training sample set in the another dimension space. Here, the another dimension space is a dimension space having dimensionality lower than the dimensionality of the training sample itself, e.g., a two-dimensional space or three-dimensional space or the like. For example, it is assumed that a training sample includes 100 features (i.e., each training sample corresponds to a 100-dimensional vector), it is usually difficult to perform sampling based on the distribution density of the training samples in such a high-dimensional space, and if its dimensionality is reduced to a lower-dimensional space, it is advantageous to perform sub-sampling based on the density.

Hereinafter, in order for convenience of description, the sub sampling process according to the present disclosure will be described by taking reducing the dimensionality of the training samples in the training sample set to a two-dimensional plane as an example.

Firstly, the training device 150 may map each training sample in the training sample set to a sample point on the two-dimensional plane. Specifically, the training device 150 may randomly generate, for each consecutive feature in each training sample, a two-dimensional vector corresponding to the each consecutive feature, and randomly generate, each value of each discrete feature in each training sample, a two-dimensional vector corresponding to the each value of each discrete feature. Then, the training device 150 may weight-sum two-dimensional vectors corresponding to respective features in each training sample to obtain a coordinate value of the training sample on the two-dimensional plane. Regarding the weight of the respective feature, here, for a consecutive feature, a weight of a two-dimensional vector corresponding thereto may be a value of the consecutive feature, and for a discrete feature, if the discrete feature has a value in the training sample, the weight of the discrete feature may be set to 1, and if the discrete feature has no value in the training sample, the weight of the discrete feature may be set to 0.

Secondly, the training device 150 may classify all sample points on the two-dimensional plane into a positive sample point set and a negative sample point set according to whether the training sample is a positive sample or a negative sample. Regarding each point set among the positive sample point set and the negative sample point set, the sample points may be sampled in accordance with a set sampling ratio according to the distribution density of the sample points in the point set, and a set constituted by training samples corresponding to the sampled sample points is used as the sub training sample set. For example, for each point set, the training device 150 may determine a planar region (e.g., a rectangular region, a square region, etc., but not limited hereto) covering all the sample points in the point set, according to a maximum value and a minimum value of abscissas and ordinates of all the sample points in the point set on the two-dimensional plane, and divide the determined planar region into multiple sub-regions (for example, a length and a width of a rectangular region each are divided into ten parts, so that it is divided into 100 rectangular sub-regions) and count a number of sub-regions where the sample points fall. In response to the number of sub-regions where the sample points fall being greater than a preset number (e.g., 25), the training device 150 may perform random sampling in accordance with the set sampling ratio in each sub-region. However, in response to the number of sub-regions where the sample points fall being less than or equal to the preset number, the training device 150 may increase the number of the divided sub-regions until the number of sub-regions where the sample points fall is greater than the preset number, and then perform random sampling in accordance with the set sampling ratio in each sub-region (e.g., in each sub-region, randomly sampling 10% of all the sample points in the sub-region). Here, increasing the number of the divided sub-regions may be further dividing the sub-regions where the sample points fall. In addition, after a sample point is obtained by sampling on the two-dimensional plane, a training sample corresponding to the sample point may be determined through inverse mapping.

According to the above sampling method of the exemplary embodiment of the present disclosure, not only a positive-to-negative sample ratio of the training samples in the training sample set is ensured, but also it is able to ensure that a distribution of the training samples in the sub training sample set is basically the same as the distribution of the training samples in the training sample set. Thus, subsequently, if the hyper-parameter value is generated using such a sub training sample set, it may not only enable the generated hyper-parameter value to have a certain fidelity, but also reduce time resource and computing resource that need to be consumed for generating the hyper-parameter value, thereby improving the efficiency of the model training.

After the sub training sample set is constructed, for the remaining hyper-parameters, the training device 150 may randomly generate predetermined sets of initial hyper-parameter values of the remaining hyper-parameters within the range of the hyper-parameter values corresponding to the number of the training samples included in the sub training sample set, train the machine learning model using the sub training sample set based on each set of hyper-parameter values constituted by the pre-defined values of the partial hyper-parameters and each set of the initial hyper-parameter values of the remaining hyper-parameters, and verify a model effect of the trained machine learning model to obtain a model effect corresponding to the each set of hyper-parameter values. Here, the number of the predetermined sets of initial hyper-parameter values depends on the number of the hyper-parameter values and the model effects corresponding thereto needed to establish the Bayesian optimization model. Generally, for different Bayesian optimization models, the number of the hyper-parameter values and the model effects corresponding thereto required for establishing the Bayesian optimization model is different. In addition, when verifying the model effect, verification samples in all the constructed machine learning samples as mentioned above other than the training sample set may be used, and the model effect may be obtained by comparing a prediction result of the trained machine learning model for each verification sample in the verification sample set with a real label of the verification sample.

Subsequently, the training device 150 may establish the Bayesian optimization model according to each set of hyper-parameter values and the model effect corresponding thereto. Establishing the Bayesian optimization model may be a process of continuously establishing relationship between a hyper-parameter value and the model effect corresponding thereto, and once the Bayesian optimization model is established, the hyper-parameter value corresponding to the desired model effect may be generated according to the correspondence relationship of the hyper-parameter value and the model effect when needed.

Then, the training device 150 may continuously determine the number of sets of hyper-parameter values that needs to be generated currently for the remaining hyper-parameters, generate one part of the number of sets using the Bayesian optimization model, and randomly generating another part of the number of sets within the range of the hyper-parameter values corresponding to the number of the training samples included in the sub training sample set. For example, it is assumed that 10 machine learning models may be trained in parallel each time according to system resource limitation, the training device 150, may first generate, after the Bayesian optimization model is established, 10 sets of hyper-parameter values by the combination method, and train 10 machine learning models using the sub training sample set based on each set of hyper-parameter values, respectively, and if it is currently determined that 4 machine learning models have been trained, the training device 150 determines that the number of sets of hyper-parameter values that needs to be generated currently for the remaining hyper-parameters is 4 (that is to say, currently, it needs to generate 4 sets of hyper-parameter values of the remaining hyper-parameters), and subsequently, the training device 150 may generate 2 sets of hyper-parameter values using the Bayesian optimization model, and randomly generate 2 sets of hyper-parameter values within the range of hyper-parameter values corresponding to the number of training samples included in the sub training sample set. Although the hyper-parameter values that need to be generated are assigned to the random generation method and the generation method using the Bayesian optimization model according to a ratio of 1: 1 in the above example, the present disclosure does not limit a ratio of one part of the above described number of sets to another part of the number of sets, for example, the ratio may be 1: 1, 1:2 or any other ratio.

In addition, it needs to be explained that after the Bayesian optimization model is established, whenever a new hyper-parameter value and the model effect corresponding thereto are obtained, using them to update the Bayesian optimization model, so that the Bayesian optimization model may be optimized continuously to generate hyper-parameter values that are more likely to be suitable for the model training. The updated Bayesian optimization model may generate new hyper-parameter values together with the random generation method according to the assigned ratio.

In addition, it needs to be explained that in the present disclosure, the training device 150 may perform in parallel the operation of generating the one part of the number of sets using the Bayesian optimization model and the operation of randomly generating the another part of the number of sets. Specifically, the operation of generating the one part of the number of sets using the Bayesian optimization model and the operation of randomly generating the another part of the number of sets may be assigned to different processes (threads), so that it is helpful to shorten the overall time of the model training. In addition, in comparison with the serial generation method using the Bayesian optimization model or random generation method, the hyper-parameter value generation method in which the random generation method and the generation method using the Bayesian optimization model are performed in parallel is more conductive to generating hyper-parameter values that are truly suitable for model training with less computational resource consumption, in addition to reducing the time resource. This is because a separate random generation method is completely random, while the Bayesian optimization model has predictability (in other words, using the Bayesian optimization model may give directivity of the hyper-parameter value according to the relationship between the hyper-parameter value and the model effect, but an accuracy of its directivity depends on whether the establishment of the Bayesian optimization model is sufficiently accurate), and if only the random generation method is used to generate the hyper-parameter values, it needs to take more attempts due to randomness to find a hyper-parameter value corresponding to a better model effect, and if only the Bayesian optimization model is used to generate hyper-parameter values, it is difficult to find a truly suitable hyper-parameter value in a short time when the predicted direction is deviated. The combination method in which the method of randomly generating the hyper-parameter value and the method of generating the hyper-parameter value using the Bayesian optimization model are combined of the present disclosure not only reduces the time resource and the computing resource consumed by the model training, but also may better ensure that the suitable hyper-parameter value is generated.

As stated above, multiple sub training sample sets with the increased number of training samples may be obtained through multiple times of sampling. In this case, whenever new hyper-parameter values of the remaining hyper-parameters are generated according to the combination method, the training device 150 may train the machine learning model using the sub training sample set obtained from the first sampling, based on each set of hyper-parameter values constituted by the pre-defined hyper-parameter values of the partial hyper-parameters and the generated new hyper-parameter values. Then, the training device 150 may select multiple sets of hyper-parameter values corresponding to the top-ranked model effects among all the sets of hyper-parameter values used when training the machine learning model using the sub training sample set obtained from the previous sampling, as all sets of hyper-parameter values to be used when training the machine learning model using the sub training sample set obtained from the next sampling. The training device 150 may repeatedly perform the above operations, until the sampling is stopped in response to a predetermined condition being satisfied, and use multiple sets of hyper-parameter values corresponding to the top-ranked model effects among all the sets of hyper-parameter values used when training the machine learning model using the sub training sample set obtained from the last sampling, as all sets of hyper-parameter values of the hyper-parameters that affect the training of the machine learning model.

For example, after obtaining a first sub training sample set through the first sampling, the training device 150 may, whenever new hyper-parameter values are generated, train the machine learning model based on each set of hyper-parameter values constituted by the pre-defined hyper-parameter values of the partial hyper-parameters and the generated new hyper-parameter values, and obtain the model effect corresponding to each set of hyper-parameter values obtained by verifying the effect of the machine learning model using the verification sample set. For example, if the number of sets of hyper-parameter values for which corresponding model effects have been obtained exceeds the preset threshold, e.g., 40 sets, several sets of hyper-parameter values (e.g., 20 sets of hyper-parameter values) corresponding to the top-ranked model effects may be selected among these 40 sets of hyper-parameter values, then the machine learning model is trained using a second sub training sample set (the second training sample set includes a larger number of training samples than the first sub training sample set) obtained from the second sampling based on each set of hyper-parameter values of the 20 selected sets of hyper-parameter values, the model effect corresponding to each set of hyper-parameter values obtained by verifying the machine learning model using the verification sample set is acquired, and several sets of hyper-parameter values (e.g., 10 sets of hyper-parameter values) corresponding to the top-ranked model effects are selected therefrom. Subsequently, the training device 150 may train the machine learning models (e.g., training 10 machine learning models) using a third sub training sample set (the third training sample set includes a larger number of training samples than the second sub training sample set) obtained from the third sampling based on each set of hyper-parameter values of 10 selected sets of hyper-parameter values, acquire the model effect corresponding to each set of hyper-parameter values obtained by verifying the machine learning model using the verification sample set, and select several sets of hyper-parameter values (e.g., 3 sets of hyper-parameter values) corresponding to the top-ranked model effects from these 10 sets of hyper-parameter values, as multiple sets of hyper-parameter values of the hyper-parameters that affect the training of the machine learning model. For convenience of description, here it is assumed that the number of times of the sampling is three, it needs to be explained that the present disclosure does not limit the number of times of the sampling and the number of several sets of hyper-parameter values with the top-ranked model effects. In addition, the several sets of hyper-parameter values may be recorded in a storage device (not shown) of the automatic model training system for subsequent use.

It needs to be explained that the hyper-parameters mentioned in the present disclosure may be any hyper-parameters that may affect the training of the machine learning model, and may vary according to different machine learning models, for example, for the neural network model, the hyper-parameters may be a number of hidden layers, a number of nodes of each layer in the hidden layer, a learning rate and the like. In addition, although it is mentioned in the description of the generation of hyper-parameter values that the values of the partial hyper-parameters may be pre-defined, and multiple sets of hyper-parameter values of other hyper-parameters may be generated by the combination method for the remaining hyper-parameters, alternatively, the values of the partial hyper-parameters may not be pre-defined, while for all the hyper-parameters, multiple sets of hyper-parameter values thereof may be generated by the combination method, or multiple sets of hyper-parameter values may further be automatically generated using different methods for different types of hyper-parameters according to the hyper-parameter types. For example, for schema type of hyper-parameters (such as the number of hidden layers, the number of nodes in each hidden layer, an activation function of each hidden layer, etc.), a neural schema search method may be used to generate multiple sets of hyper-parameter values thereof, while for training type of hyper-parameters, (such as a learning rate, embedding dimension, etc.), multiple sets of hyper-parameter values thereof may be generated according to the above-described combination method or the random generation method.

As stated above, after the multiple sets of hyper-parameter values of the hyper-parameters that affect the training of the machine learning model are generated, the training device 150 may train multiple machine learning models using the constructed machine learning sample based on each set of hyper-parameter values of the multiple sets of hyper-parameter values, respectively. Here, the constructed machine learning samples may be partial training samples in the training sample set, and also may be all the training samples in the training sample set. For example, in the case where the number of the training samples included in the training sample set is less than the preset threshold, the entire training sample set may be directly used to train the machine learning model, while in the case where the number of the training samples included in the training sample set is greater than the preset threshold, partial training samples in the training sample set may be used to train the machine learning model.

After multiple machine learning models are trained, the training device 150 may select several machine learning models with top-ranked model effects among the multiple trained machine learning models, and fuse the several selected machine learning models through a predetermined model fusion strategy to determine a finally trained machine learning model. Specifically, in the case where the number of the training samples included in the training sample set is larger than the preset threshold, since in order to enhance a hyper-parameter value search efficiency, the sub training sample set obtained by sampling the training samples is used to train the machine learning model, rather than using the entire training sample set to train the machine learning model, in this case, the training device 150 may obtain the several sets of hyper-parameter values used when training the several machine learning models with the top-ranked model effects (the several machine learning models trained using the sub training sample set) from the storage device (not shown), perform secondary training on the machine learning models using the entire training sample set based on each set of hyper-parameter values of the several sets of hyper-parameter values, and fuse the several machine learning models on which the secondary training is performed through a predetermined model fusion strategy to determine the finally trained machine learning model, thereby improving the model training effect. In addition, in the present disclosure, the automatic model training system 100 may store the number of training rounds for secondary training of the machine learning model using the entire training sample set in the storage device (not shown) for subsequent use.

Hereinafter, a process of the model fusion according to the present disclosure will be briefly described.

The training device 150 may first use the several machine learning models as an initial model candidate set. Then, for the initial model candidate set, following model combination operations are performed: combining a machine learning model with a best model effect among the several machine learning models with machine learning models in the initial model candidate set, respectively, and calculating a model effect of a respective combined machine learning model group; determining whether the model effect of the respective combined machine learning model group is improved compared with the best model effect before the combination; in response to the model effect of the respective combined machine learning model group being not improved compared with the best model effect before the combination, determining the machine learning model with the best model effect before the combination as a final machine learning model; in response to the model effect of the respective combined machine learning model group being improved compared with the best model effect before the combination, adding the combined machine learning model group with the best model effect after the combination to the initial model candidate set to constitute a current model candidate set. Next, the training device 150 may repeat, for the current model candidate set, model combination operations same as the model combination operations performed for the initial model candidate set for a predetermined number of times, and select a machine learning model combination with the best model effect in the finally generated current model candidate set. Finally, respective weights of the several machine learning models when the models are fused are determined according to the number of each machine learning model in the several machine learning models included in the machine learning model combination.

Hereinafter, the process of the model fusion of the present disclosure will be briefly described through an example. It is assumed that three machine learning models M1, M2 and M3 with the top-ranked model effects are selected, and the model effects corresponding thereto are 0.7, 0.8 and 0.9, respectively, then the initial model candidate set is { M1, M2, M3}. Since the model effect of M3 in the initial model candidate set is the best, M3 may be combined with M1, M2 and M3 in the initial model candidate set to obtain the combined machine learning model groups [M1, M3], [M2, M3] and [M3, M3], and the model effects of the combined machine learning models are computed. As an example, the model effect of the combined machine learning model group is computed by comparing a value obtained through averaging the prediction results of each machine learning model in the combined machine learning model group for the verification sample set with a real label value of the verification sample set. It is assumed that the computed model effects of the machine learning model groups [M1, M3], [M2, M3] and [M3, M3] are 0.85, 0.92 and 0.9, respectively, since the model effect of [M2, M3] is larger than the model effect of the best machine learning model M3 before the combination, the machine learning model group [M2, M3] may be added to the current model candidate set, and the model candidate set at this time is {M1, M2, M3, [M2, M3]}. Then, [M2, M3] with the best model effect in the current model candidate set is combined with M1, M2, M3 and [M2, M3] in the current model candidate set, respectively, and the model effects of the combined machine learning model groups [M1, M2, M3], [M2, M2, M3], [M3, M2, M3] and [M2, M3, M2, M3] are computed. It is assumed that the model effect of [M1, M2, M3] is better than the model effect of [M2, M3], [M1, M2, M3] is added to the model candidate set, then the current model candidate set is {M1, M2, M3, [M2, M3], [M1, M2, M3]}. It is assumed that after such multiple iterations, the machine learning model with the best model effect that is finally generated in the current model candidate set is [M1, M2, M2, M3, M3], since in the group, the number of M1 is 1, the number of M2 is 2 and the number of M3 is 2, respective weights of the machine learning models M1, M2 and M3 when the models are fused are respectively: 1/5, 2/5 and 2/5.

So far, the training device 150 has obtained several sets of hyper-parameter values of the best model effect on the verification sample set (in the above example, for example, the 3 sets of hyper-parameter values corresponding to the best model effect have been obtained, 3 machine learning models trained respectively based on each set of hyper-parameter values of the 3 sets of hyper-parameter values are obtained at the same time), the number of rounds of training the machine learning models using the training sample set based on each set hyper-parameter values and the weights (e.g., 1/5, 2/5, and 2/5) of the respective machine learning models, and they may be stored in the storage device.

However, since the machine learning models trained above are the machine learning models with the best model effect on the verification sample set, and the verification sample set itself does not participate in the training of the model, alternatively, according to the exemplary embodiment of the present disclosure, the training device 150 may further obtain several sets of hyper-parameter values used when training several machine learning models with the top-ranked model effects, the number of rounds of training the machine learning models using the training sample set respectively based on each set of hyper-parameter values of the several sets of hyper-parameter values, and train the machine learning models for the corresponding number of rounds using all the constructed machine learning samples (all the machine learning samples after merging the training sample set and the verification sample set) based on each set of hyper-parameter values to obtain several re-trained machine learning models. Finally, the training device 150 may fuse the several re-trained machine learning models according to the previously determined respective weights when the models are fused, to obtain the finally trained machine learning model, and the finally trained machine learning model is the machine learning model with the best model effect on the entire constructed machine learning samples.

Although fusion of a weighted sum manner is used in the model fusion described above, a fusion manner is not limited hereto, and may further be, for example, an average fusion manner, a voting fusing manner etc., and in the present disclosure, different kinds of machine learning models may be further fused, and it is not merely limited to the fusion of the same kind of machine learning models trained under different hyper-parameter values.

In addition, the machine learning model mentioned in the present disclosure may be a neural network model (e.g., a deep sparse network) or a logistic regression model, but is not limited hereto, and may be any machine learning model.

The automatic model training system according to the exemplary embodiment of the present disclosure has been described above with reference to FIG. 1, which may automatically determine the feature engineering strategy through the meta-learning, generate sample features using the determined feature engineering strategy to construct the machine learning samples, and train the machine learning models using the constructed machine learning samples based on the automatically obtained hyper-parameters, so that the dependence on the machine learning experts in the model training is significantly reduced, and the model training efficiency is improved while the training effect is ensured.

It needs to be explained that although the automatic model training system is divided into devices (such as the data set acquisition device 110, the feature engineering strategy determination device 120, the feature generation device 130, the sample construction device 140 and the training device 150) when it is described above, those skilled in the art understand that the processing executed by the respective devices may also be executed in the case where the automatic model training system is not divided into the specific devices or there is no distinct demarcation between the respective devices. In addition, the automatic model training system 100 described above with reference to FIG. 1 includes but is not limited to the above-described devices, and some other devices (such as a storage device, a data processing device and the like) may be further added according to the needs, or the above devices may also be combined.

It needs to be explained that the implementation of the exemplary embodiments of the present disclosure does not depend on any definition on specific service logic, but concentrates on a more general scenario. Unlike most existing solutions, the exemplary embodiments of the present disclosure do not focus on one specific scenario, but may be applied to a variety of different scenarios, such as a recommendation system, an advertising systems, a banking system, and so on. In addition, on the basis of the exemplary embodiments of the present disclosure, modelers may continue to add their own service experience etc. to further improve the model training effect. Thus, the exemplary embodiments of the present disclosure consider the abstraction of the application scenarios, and are not aimed at a specific scenario, but are applicable to any scenario.

That is to say, according to the exemplary embodiments of the present disclosure, the data in the data set may be image data, voice data, text data and service data, for example, data for describing engineering control objects, data for describing users (or their behaviors), data for describing objects and event in administration, commerce, medical care, supervision, finance and other fields. Correspondingly, the machine learning model mentioned in the present disclosure aims to predict problems related to the above objects and events in order to help users make decisions. For example, the model provided by the present disclosure may be applied to predicting image category, text category, speech emotion, fraudulent transaction, advertising click-through rate and the like, so that the prediction result may be directly used as a basis for decision-making or further combined with other rules to become a basis for decision-making. The exemplary embodiments of the present disclosure do not limit the specific technical fields related to the prediction purpose of the model, but the reason is that the model is completely applicable to any specific field or scenario that may provide corresponding training data or prediction data, and this does not mean that the model may not be applied to the related technical fields.

That is to say, after the automatically trained machine learning model is obtained as described above, prediction data records may be further collected, and the prediction data records are input to the above machine learning model to obtain the corresponding prediction result, and the prediction result is used to make the corresponding decision. For example, financial service data is collected, features related to the financial data are generated according to the feature engineering strategy, a prediction sample is constructed at least based on the generated features, a prediction result provided by a machine learning model for the prediction sample is acquired, and financial risk control, marketing, collection or other activities is performed according to the prediction result. For example, a warning or notification corresponding to the financial risk control, marketing, collection or the like is generated so as to output the warning or notification to the decision-making entity or related user. The financial service data may also be Internet service related data, production control data, and the like.

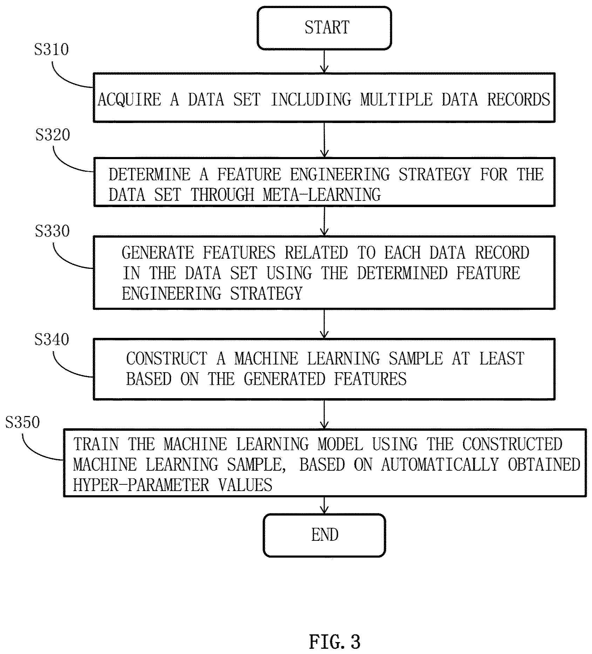

FIG. 3 illustrates a flow chart of a method for automatically training a machine learning model (hereinafter referred to as an "automatic model training method" for the convenience of description) according to an exemplary embodiment.

Here, as an example, the automatic model training method as illustrated in FIG. 3 may be executed by the automatic model training system 100 as illustrated in FIG. 1, may also be completely implemented through a computer program or instructions in software manner, and may further be executed by a computing system or a computing device with specific configuration, for example, may be executed by a system including at least one computing device at least one storage device storing instructions, wherein the instructions, when executed by the at least one computing device, cause the at least one computing device to perform the above machine learning method. In order for convenience of description, it is assumed that the method as illustrated in FIG. 3 is executed by the automatic model training system 100 as illustrated in FIG. 1, and it is assumed that the automatic model training system 100 may have the configuration as illustrated in FIG. 1.

Referring to FIG. 3, in step S310, the data set acquisition device 110 may acquire a data set including multiple data records. Here, the data set may relate to at least one of image data, voice data, text data and service data, but not limited hereto.

In step S320, the feature engineering strategy determination device 120 may determine a feature engineering strategy for the data set through meta-learning. For example, in step S320, the feature engineering strategy determination device 120 may analyze the data set to obtain a meta feature that reflects overall characteristics of the data set, and determine the feature engineering strategy for the data set based on the obtained meta feature. For example, the feature engineering strategy determination device 120 may analyze the data set to obtain at least one of statistic information regarding the number of data records included in the data set, types of features included in the data record, the number of the features, and values of the features, as a meta feature. As an example, the meta feature may include at least one of: the number of the data records included in the data set, the number of discrete features included in the data record, the number of consecutive features included in the data record, whether there is a time feature in the data record, the number of time features included in the data record, a filling degree of each discrete feature, a filling degree of each consecutive feature, an average filling degree of all the discrete features and an average filling degree of all the consecutive features, a mean, variance, median, maximum or minimum value of respective consecutive feature values, or thenumber of different values of respective discrete features, or a result obtained by performing comprehensive and statistical analysis on the above respective items, but is not limited hereto.

After the meta feature of the data set is obtained, for example, the feature engineering strategy determination device 120 may automatically determine the feature engineering strategy for the data set based on the obtained meta feature, according to correspondence relationship between the meta feature and the feature engineering strategy. Alternatively, the feature engineering strategy determination device 120 may also determine the feature engineering strategy for the data set using another machine learning model based on the obtained meta feature. As an example, the feature engineering strategy determination device 120 may determine a historical data set that is similar to the data set and has a corresponding model training result, using a clustering model as the another machine learning model based on the obtained meta feature, and determine a feature engineering strategy corresponding to the historical data set as the feature engineering strategy for the data set. As another example, the feature engineering strategy determination device 120 may input a prediction sample constituted based on the obtained meta feature to a prediction model as the another machine learning model, and use a prediction result of the prediction model for the prediction sample as the feature engineering strategy for the data set. Here, the prediction model may be pre-trained to predict the feature engineering strategy corresponding to the meta feature based on the meta feature.

As an example, when determining the feature engineering strategy for the data set based on the obtained meta feature, the feature engineering strategy determination device 120 may perform at least one of following operations: in response to the discrete features being stronger than the consecutive features in distribution, determining the feature engineering strategy for the data set as: discretizing the consecutive features to obtain discretization features, and searching Cartesian product combinations of original discrete features and the discretization features for a discrete feature combination that is beneficial to a training effect of the model, as the generated feature related to each data record; in response to the consecutive features being stronger than the discrete features in distribution, determining the feature engineering strategy for the data set as: training a gradient boosting decision tree model using the data set, and using a serial number of a leaf node of each decision tree where the sample constituted based on each data record falls as the generated feature related to each data record; in response to there being the time feature in the data set, determining the feature engineering strategy for the data set as: sorting the multiple data records according to the time feature, and in a process of training a logistic regression model sequentially using the sorted data records, acquiring a sequence feature corresponding to the current data record based on a parameter item related to a model parameter of the logistic regression model as the generated feature related to each data record; and in response to the data set including multiple time features, determining the feature engineering strategy for the data set as: generating, for each data record, the feature related to each data record by combing the multiple time features in pairs and then subtracting them.

In step S330, the feature generation device 130 may generate features related to each data record in the data set using the feature engineering strategy determined in step S320. Next, in step S340, the sample construction device 140 may construct a machine learning sample at least based on the generated features.

Finally, in step S350, the training device 150 may train the machine learning model using the constructed machine learning sample based on automatically obtained hyper-parameter values.

For example, in step S350, the training device 150 may use one part of all the constructed machine learning samples as a training sample set, generate multiple sets of hyper-parameter values of the hyper-parameters that affect the training of the machine learning model by automatically using different hyper-parameter generation strategies according to the number of the training samples in the training sample set, train multiple machine learning models using the constructed machine learning samples respectively based on each set of hyper-parameter values of the multiple sets of hyper-parameter values, select several machine learning models with the top-ranked model effects from multiple trained machine learning models, and fuse the several selected machine learning models through a predetermined model fusion strategy to determine the finally trained machine learning model.

Specifically speaking, in response to the number of the training samples included in the training sample set being less than or equal to the preset threshold, the training device 150 may generate the multiple sets of hyper-parameter values of the hyper-parameters by: randomly generating the multiple sets of hyper-parameter values of the hyper-parameters within a range of the hyper-parameter values corresponding to the number of the training samples, or pre-defining hyper-parameter values of partial hyper-parameters among the hyper-parameters, and randomly generating, for remaining hyper-parameters, multiple sets of hyper-parameter values of the remaining hyper-parameters within the range of the hyper-parameter values corresponding to the number of the training samples. In response to the number of the training samples included in the training sample set being greater than the preset threshold, the training device 150 may generate the multiple sets of hyper-parameter values of the hyper-parameters by: pre-defining hyper-parameter values of partial hyper-parameters among the hyper-parameters, and generating, for remaining hyper-parameters, multiple sets of hyper-parameter values of the remaining hyper-parameters by a combination method in which a method of randomly generating the hyper-parameter values within the range of the hyper-parameter values corresponding to the number of the training samples and a method of generating hyper-parameter values using a Bayesian optimization model are combined, here the Bayesian optimization model may be constructed to reflect relationship between a hyper-parameter value and a model effect corresponding thereto. Moreover, after the Bayesian optimization model is established, whenever a new hyper-parameter value and the model effect corresponding thereto are obtained, the training device 150 may use them to update the Bayesian optimization model.

Specifically speaking, when the hyper-parameter values for the remaining hyper-parameters are generated by the combination method, a sub training sample set may be first constructed by sampling the training samples in the training sample set. For example, the training device 150 may construct a sub training sample set by performing sub-sampling based on density for the training samples in the training sample set. Specifically, the training device 150 may reduce dimensionality of the training samples in the training sample set to another dimension space, and construct the sub training sample set by sampling the training samples according to labels of the training samples and distribution density of the training samples in the training sample set in the another dimension space. For example, the training device 150 may map each training sample in the training sample set to a sample point on a two-dimensional plane. Subsequently, the training device 150 may classify all sample points on the two-dimensional plane into a positive sample point set and a negative sample point set according to whether the training sample is a positive sample or a negative sample. Regarding each point set among the positive sample point set and the negative sample point set, the sample points are sampled in accordance with a set sampling ratio according to distribution density of the sample points in the point set, and a set constituted by training samples corresponding to the sampled sample points is used as the sub training sample set. Specifically, for example, the training device 150 may determine a planar region covering all the sample points in the point set, according to a maximum value and a minimum value of abscissas and ordinates of all the sample points in the point set on the two-dimensional plane, and divide the determined planar region into multiple sub-regions and count the number of sub-regions where the sample points fall. Subsequently, in response to the number of sub-regions where the sample points fall being greater than a preset number, the training device 150 may perform random sampling in accordance with the set sampling ratio in each sub-region. In response to the number of the sub-regions where the sample points fall being less than or equal to the preset number, the training device 150 may increase the number of the divided sub-regions until the number of the sub-regions where the sample points fall is greater than the preset number, and then perform random sampling in accordance with the set sampling ratio in each sub-region.

Subsequently, for the remaining hyper-parameters, predetermined sets of initial hyper-parameter values of the remaining hyper-parameters are randomly generated within the range of the hyper-parameter values corresponding to the number of the training samples included in the sub training sample set, the machine learning model is trained using the sub training sample set based on each set of hyper-parameter values constituted by the pre-defined values of the partial hyper-parameters and each set of initial hyper-parameter values of the remaining hyper-parameters, and the model effect of the trained machine learning model is verified to obtain the model effect corresponding to the each set of hyper-parameter values. Next, the Bayesian optimization model is established according to the each set of hyper-parameter values and the model effect corresponding thereto. After the Bayesian optimization model is established, the training device 150 may continuously determine the number of sets of hyper-parameter values that needs to be generated currently for the remaining hyper-parameters, generate one part of the number of sets using the Bayesian optimization model, and randomly generating another part of the number of sets within the range of the hyper-parameter values corresponding to the number of the training samples included in the sub training sample set. Here, the operation of generating the one part of the number of sets using the Bayesian optimization model and the operation of randomly generating the another part of the number of sets may be performed in parallel.

It needs to be explained that sampling the training samples in the training sample set to construct a sub training sample set may be performing multiple times of sampling for the training samples in the training sample set to construct multiple sub training sample sets with different numbers of training samples, and among the multiple times of sampling, the sub training sample set obtained from the latter sampling may include more training samples than the sub training sample set obtained from the previous sampling. In this case, whenever new hyper-parameter values of the remaining hyper-parameters are generated according to the combination method, the training device 150 may train the machine learning model using the sub training sample set obtained from first sampling, based on each set of hyper-parameter values constituted by the pre-defined hyper-parameter values of the partial hyper-parameters and the generated new hyper-parameter values. Thereafter, multiple sets of hyper-parameter values corresponding to the top-ranked model effects are selected among all the sets of hyper-parameter values used when training the machine learning model using the sub training sample set obtained from the previous sampling, as all sets of hyper-parameter values to be used when training the machine learning model using the sub training sample set obtained from the next sampling. In response to a predetermined condition being satisfied, the training device 150 may stop the sampling, and use multiple sets of hyper-parameter values corresponding to the top-ranked model effects among all the sets of hyper-parameter values used when training the machine learning model using the sub training sample set obtained from the last sampling, as all sets of hyper-parameter values of the hyper-parameters that affect the training of the machine learning model.

As mentioned above, after multiple sets of hyper-parameter values of the hyper-parameters that affect the training of the machine learning model are generated, the training device 150 may train multiple machine learning models using the constructed machine learning samples respectively based on each set of hyper-parameter values of the multiple sets of hyper-parameter values, select several machine learning models with the top-ranked model effects from multiple trained machine learning models, and then fuse the several selected machine learning models through a predetermined model fusion strategy to determine the finally trained machine learning model.

Specifically, in order to perform model fusing, the training device 150 may first use the several machine learning models as an initial model candidate set, and for the initial model candidate set, performing following model combination operations: combining a machine learning model with the best model effect among the several machine learning models with the machine learning models in the initial model candidate set, respectively, and calculating a model effect of a respective combined machine learning model group; determining whether the model effect of the respective combined machine learning model group is improved compared with the best model effect before the combination; in response to the model effect of the respective combined machine learning model group being not improved compared with the best model effect before the combination, determining the machine learning model with the best model effect before the combination as a final machine learning model; in response to the model effect of the respective combined machine learning model group being improved compared with the best model effect before the combination, adding the combined machine learning model group with the best model effect after the combination to the initial model candidate set to constitute a current model candidate set. Thereafter, the training device 150 may repeat, for the current model candidate set, model combination operations the same as the model combination operations performed for the initial model candidate set for a predetermined number of times, and select a machine learning model combination with the best model effect in the finally generated current model candidate set. Finally, the training device 150 may determine respective weights of the several machine learning models when the models are fused, according to the number of each machine learning model in the several machine learning models included in the machine learning model combination.

Alternatively, in the case where the number of the training samples included in the training sample set is larger than the preset threshold, the training device 150 may acquire the several sets of hyper-parameter values used when training the several machine learning models with the top-ranked model effects, perform secondary training on the machine learning models using the training sample set based on each set of hyper-parameter values of the several sets of hyper-parameter values, and fuse the several machine learning models on which the secondary training is performed through a predetermined model fusion strategy to determine the finally trained machine learning model.

In addition, in order to further improve the effect of the finally trained machine learning model, the training device 150 may further acquire several sets of hyper-parameter values used when training several machine learning models with the top-ranked model effects, the number of rounds of training the machine learning models using the training sample set respectively based on each set of hyper-parameter values of the several sets of hyper-parameter values, train the machine learning models for the corresponding number of rounds using all the constructed machine learning samples based on each set of hyper-parameter values, to obtain several re-trained machine learning models, and fuse the several re-trained machine learning models according to the respective determined weights when the models are fused, to obtain the finally trained machine learning model.

In the above description, the machine learning model may be a neural network model or a logistic regression model, but is not limited hereto.

The contents mentioned above when describing the respective devices included in the automatic model training system with reference to FIG. 1 are applicable here, so for the details involved in the above steps, please refer to the corresponding description of FIG. 1, which will not be repeated here.

The above-described automatic model training method according to the exemplary embodiment of the present disclosure may automatically determine the feature engineering strategy through the meta-learning, use the determined feature engineering strategy to generate sample features so as to construct the machine learning sample, and use the constructed machine learning sample to train the machine learning model using the automatically obtained hyper-parameters, so that the dependence of model training on the personal experience of machine learning experts is significantly reduced, and also, it is unnecessary for relevant service personnel to have an in-depth understanding of the services. This not only reduces the threshold for the application of the machine learning, but also improves the model training efficiency while ensuring the training effect.

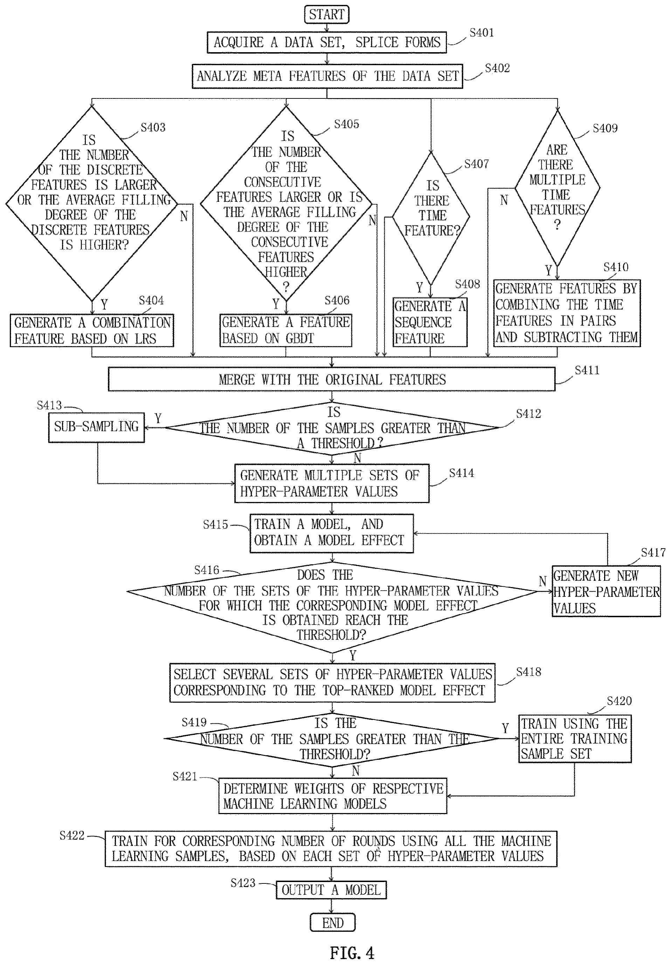

FIG. 4 illustrates a flow chart of a method for automatically training a machine learning model according to an exemplary embodiment.

In order to understand the automatic model training method of the present disclosure more intuitively, an example of the automatic model training method will be briefly described below by taking a content recommendation scenario as an example with reference to FIG. 4.

It is assumed that a content provider expects to predict whether the content (e.g., news, advertisements, musics, videos etc.) recommended to a user will be accepted by the user, the automatic model training method in FIG. 4 may be used to obtain the corresponding model to perform prediction for this.

Referring to FIG. 4, firstly, in step S401, a computing device may acquire a data set including various form data records from the content provider, and may splice the form data to form a complete form. For example, each data record in the spliced form may include multiple attribute fields (e.g., user ID, age, occupation, content ID, content subject title, key word, time to log into the app, time when the user exits the app, user history favorites and the like). Subsequently, in step S402, the computing device may analyze the data set to obtain a meta feature that reflects overall characteristics of the data set, and determine the feature engineering strategy for the data set based on the obtained meta feature. For example, in step S403, the computing device may determine whether there are more discrete features than consecutive features in the data record or whether the average filling degree of the discrete features is higher than the average filling degree of the consecutive features, and if there are more discrete features than consecutive features in the data record or the average filling degree of the discrete features is higher than the average filling degree of the consecutive features, the computing device generates a combined feature based on the logistic regression model in step S404. In step S405, the computing device may determine whether there are more consecutive features than discrete features in the data record or the average filling degree of the consecutive features is higher than the average filling degree of the discrete features and if there are more consecutive features than discrete features in the data record or the average filling degree of the consecutive features is higher than the average filling degree of the discrete features, the computing device generates a feature based on the boosting decision tree model in step S406. In step S407, the computing device may determine whether there is a time feature in the data record, and if there is a time feature in the data record, the computing device sorts the data records according to the time feature and generates a sequence feature in step S408. In step S409, the computing device may determine whether there are multiple time features in the data record, and if there are multiple time features in the data record, the computing device generates a feature by combining the time features in pairs and the subtracting them in step S410. Various methods of generating the feature has been described above with reference to FIG. 1, which will not be repeated here. In step S411, the computing device may, for example, merge the generated feature with the original features of the data record to construct the machine learning sample.

In step S412, the computing device may determine whether the number of the samples (e.g., the training samples in the training sample set, which may be one part of all the machine learning samples constructed in step S411) to be used to train the machine learning model is greater than a threshold. If the number of the samples is greater than the threshold, the computing device may perform sampling (e.g., sub-sampling based on density) for the samples to obtain a sub training sample set, and if the number of the samples is not greater than the threshold, it is proceeded to step S414. Next, in step S414, the computing device may generate multiple sets of hyper-parameter values of the hyper-parameters. Specifically, if the number of the samples for training the machine learning model is greater than the threshold, in step S414, the multiple sets of hyper-parameter values of the hyper-parameters are generated by the combination method in which the above-mentioned random generation method and the Bayesian optimization model generation method are combined using the sub training sample set obtained in step S413. If the number of the samples for training the machine learning model is less than the threshold, the multiple sets of hyper-parameter values of the hyper-parameters are generated within the range of the hyper-parameter values corresponding to the number of the training samples. Subsequently, in step S415, the computing device trains the machine learning model based on each set of hyper-parameter values, and obtains the model effect of the machine learning model corresponding to each set of hyper-parameter values. In step S416, the computing device may determine whether the number of sets of hyper-parameter values for which the corresponding model effect has been obtained reaches a threshold. If the number of sets does not reach the threshold, in step S417, new hyper-parameters are continuously generated. If the number of sets reaches the threshold, in step S418, several sets of hyper-parameter values of which the corresponding model effects are top ranked are selected among all the sets of hyper-parameter values for which the corresponding model effects have been obtained.

Next, in step S419, the computing device may determine whether the number of the samples for training the machine learning model is greater than the threshold, if the number of sets is greater than the threshold, since the sub training sample set is used to train the machine learning model previously, in step S420, the computing device trains the machine learning model using the entire training sample set based on each set of hyper-parameter values selected among the several sets of hyper-parameter values in step S418, thereby obtaining several machine learning models and the number of rounds of training each machine learning model in the several machine learning models under each set of hyper-parameter values. In step S421, the computing device may determine respective weights of the several machine learning models when the models are fused. In step S422, the computing device may train the machine learning model for the corresponding number of rounds (e.g., the number of round obtained in step S420) using all the machine learning samples constructed previously, based on each set of hyper-parameter values among the several selected sets of hyper-parameter values, and fuse the several machine learning models according to the weights of the respective machine learning models determined in step S412. Finally, in step S423, the computing device may output the finally trained machine learning model. For example, the computing device may output the outputted model to a local system of the content operator, or arrange it on a cloud. The outputted model may be used to provide a corresponding prediction result for a prediction sample. For example, whenever the content operators expect to predict whether the content they recommend to a user will be accepted by the user, they may construct a corresponding prediction sample (construct the prediction sample according to a method the same as the above method of constructing the machine learning sample), and input it into the trained machine learning model to obtain the corresponding prediction result (e.g., a probability that the contents will be accepted by the user). Thereafter, the content operator may make a corresponding service decision according to the prediction result, for example, whether to recommend the contents to the user.

Here, the computing device may be constructed by the content operator itself, or may be provided by a specialized entity that provides a machine learning service. Correspondingly, the computing device may be disposed at a cloud (such as a public cloud, a private cloud or a hybrid cloud), or may also be disposed in the local system of the content operator.

It needs to be explained that, only the content recommendation scenario is taken as an example above to illustrate an example of the method according to the exemplary embodiment of the present disclosure. However, those skilled in the art understand that the automatic model training method of the present disclosure is not limited to the above example, and the exemplary embodiment of the present disclosure is not merely limited to the content recommendation scenario, but may be applicable to any service scenario to help the user make the service decision, such as credit card fraud detection, abnormal behavior detection, user interest extraction, precision marketing, and so on.

The automatic model training system and the automatic model training method according to the exemplary embodiments of the present disclosure have been described above with reference to FIGS. 1 to 4. However, it should be understood that the devices and the system as shown in the drawings may be configured as software, hardware, firmware or any combination thereof for performing specific functions. For example, these systems and devices may correspond to a special integrated circuit, or may correspond to a pure software code, and may further correspond to a module formed by combining software and hardware. In addition, one or more functions implemented by these systems and devices may also be uniformly performed by components in a physical entity apparatus (e.g., a processor, a client, a server or the like).

In addition, the above method may be implemented through instructions stored on a computer readable storage medium, for example, according to an exemplary embodiment of the present disclosure, a computer readable storage medium storing instructions may be provided, wherein the instructions, when executed by at least one computing device, cause the at least one computing device to execute following steps: acquiring a data set including multiple data records; determining a feature engineering strategy for the data set through meta-learning; generating features related to each data record in the data set using the determined feature engineering strategy; constructing a machine learning sample at least based on the generated features; and training the machine learning model using the constructed machine learning sample based on automatically obtained hyper-parameter values.

The instructions stored in the above-mentioned computer readable storage medium may be executed in an environment deployed in computer equipment such as a client, a host, an agent device, or a server. It should be noted that the instructions may also be used to perform additional steps in addition to the above steps or more specific processing when performing the above steps. The contents of these additional steps and further processing have been mentioned in the description of the machine learning method with reference to FIG. 3, which will not be repeated here again in order to avoid repetition.

It should be noted that the machine learning system according to the exemplary embodiment of the present disclosure may completely depend on the operation of the computer program or instructions to realize the corresponding functions, that is, each device corresponds to each step in the functional architecture of the computer program, so that the entire system may be invoked by a special software package (e.g., lib library) to achieve the corresponding function.

On the other hand, when the system and devices shown in FIG. 1 are implemented by software, firmware, middleware or microcode, the program code or code segment for performing the corresponding operation may be stored in a computer readable medium such as a storage medium, to cause at least one processor or at least one computing device to execute the corresponding operation by reading and running the corresponding program code or code segment.

For example, according to the exemplary embodiment of the present disclosure, a system including at least one computing device and at least one storage device storing instructions is provided, wherein the instructions, when executed by the at least one computing device, cause the at least one computing device to perform following steps: acquiring a data set including multiple data records; determining a feature engineering strategy for the data set through meta-learning; generating features related to each data record in the data set using the determined feature engineering strategy; constructing a machine learning sample at least based on the generated features; and training the machine learning model using the constructed machine learning sample based on automatically obtained hyper-parameter values.

Specifically, the above system may be deployed in a server or a client, and may also be deployed on a node in a distributed network environment. In addition, the system may be a PC computer, a tablet device, a personal digital assistant, a smart phone, a web app or any other device capable of executing the above indication set. In addition, the system may further include a video display (such as a liquid crystal display) and a user interaction interface (such as a keyboard, a mouse, a touch input device, etc.). In addition, all the components of the system may be connected to each other via at least one of a bus and a network.

Here, the system does not have to be a single system, and may also be any aggregate of devices or circuits that can execute the above-mentioned indications (or indication sets) individually or jointly. The system may also be a part of an integrated control system or a system manager, or may be a portable electronic device configured to be interconnected with the local or remote (e.g., via wireless transmission) via interfaces.

In the system, the at least one computing device may include a central processing unit (CPU), a graphics processing unit (GPU), a programmable logic device, a dedicated processor system, a microcontroller, or a microprocessor. As an example rather than limitation, the at least one computing device may also include an analog processor, a digital processor, a microprocessor, a multi-core processor, a processor array, a network processor, and the like. The computing device may run indications or codes stored in the storage device, wherein the storage device may also store data. Instructions and data may also be transmitted and received over a network via a network interface device, wherein the network interface device may use any known transmission protocol.

The storage device may be integrated with the computing device, for example, RAM or flash memory is arranged in an integrated circuit microprocessor or the like. In addition, the storage device may include a separate device, such as an external disk drive, a storage array, or any other storage device that can be used by a database system. The storage device and the computing device may be operatively coupled, or may communicate with each other, for example, through an I/O port, a network connection or the like, so that the computing device can read instructions stored in the storage device.

Various exemplary embodiments of the present disclosure are described above. It should be noted that the above description is merely for illustrative purpose, and is not exhaustive. The present disclosure is not limited to the various exemplary embodiments that are disclosed. It is obvious for those skilled in the art to make many modifications and changes without departing from the scope and spirit of the present disclosure. Therefore, the protection cope of the present disclosure should be consistent with the protection scope of the claims.

### INDUSTRIAL APPLICABILITY

The method and system for automatically training the machine learning model provided by the present disclosure may determine the feature engineering strategy through the meta-learning, generate sample features using the determined feature engineering strategy to construct the machine learning sample, and training the machine learning model using the constructed machine learning sample based on the automatically obtained hyper-parameters, so that the dependence of the model training on the personal experience of machine learning experts is reduced, and also, it is unnecessary for relevant service personnel to have an in-depth understanding of the services. This not only reduces the threshold for the application of the machine learning, but also improves the model training efficiency while ensuring the training effect.

## Claims

1. A system comprising at least one computing device and at least one storage device storing instructions, wherein the instructions, when executed by the at least one computing device, cause the at least one computing device to perform following steps for automatically training a machine learning model, the steps comprising:
acquiring a data set comprising multiple data records;
determining a feature engineering strategy for the data set through meta-learning;
generating features related to each data record in the data set using the determined feature engineering strategy;
constructing a machine learning sample at least based on the generated features; and
training the machine learning model using the constructed machine learning sample, based on automatically obtained hyper-parameter values.

2. The system of claim 1, wherein the determining of the feature engineering strategy for the data set through the meta-learning comprises:
analyzing the data set to obtain a meta feature that reflects overall characteristics of the data set; and
determining the feature engineering strategy for the data set based on the obtained meta feature.

3. The system of claim 2, wherein the determining of the feature engineering strategy for the data set based on the obtained meta feature comprises:
automatically determining the feature engineering strategy for the data set based on the obtained meta feature according to correspondence relationship between the meta feature and the feature engineering strategy; or
determining the feature engineering strategy for the data set using another machine learning model based on the obtained meta feature.

4. The system of claim 3, wherein the determining of the feature engineering strategy for the data set using another machine learning model comprises:
determining a historical data set that is similar to the data set and has a corresponding model training result using a clustering model as the another machine learning model based on the obtained meta feature, and determining a feature engineering strategy corresponding to the historical data set as the feature engineering strategy for the data set; or
inputting a prediction sample constituted based on the obtained meta feature to a prediction model as the another machine learning model, and using a prediction result of the prediction model for the prediction sample as the feature engineering strategy for the data set, wherein the prediction model is pre-trained to predict the feature engineering strategy corresponding to the meta feature based on the meta feature.

5. The system of claim 2, wherein the analyzing of the data set to obtain the meta feature that reflects the overall characteristics of the data set comprises:
analyzing the data set to obtain statistic information regarding at least one of a number of data records comprised in the data set, types of features comprised in the data record, a number of the features, and values of the features, as the meta feature.

6. The system of claim 5, wherein the meta feature comprises at least one of: the number of the data records comprised in the data set, a number of discrete features comprised in the data record, a number of consecutive features comprised in the data record, whether there is a time feature in the data record, a number of time features comprised in the data record, a filling degree of each discrete feature, a filling degree of each consecutive feature, an average filling degree of all the discrete features, an average filling degree of all the consecutive features, a mean, variance, median, maximum or minimum value of respective consecutive feature values, and a number of different values of respective discrete features.

7. The system of claim 6, wherein the determining of the feature engineering strategy for the data set based on the obtained meta feature comprises at least one of following operations:
in response to the discrete features being stronger than the consecutive features in distribution, determining the feature engineering strategy for the data set as: discretizing the consecutive features to obtain discretization features, and searching Cartesian product combinations of original discrete features and the discretization features for a discrete feature combination that is beneficial to a training effect of the model, as the generated feature related to each data record;
in response to the consecutive features being stronger than the discrete features in distribution, determining the feature engineering strategy for the data set as: training a gradient boosting decision tree model using the data set, and using a serial number of a leaf node of each decision tree where the sample constituted based on each data record falls as the generated feature related to each data record;
in response to there being the time feature in the data set, determining the feature engineering strategy for the data set as: sorting the multiple data records according to the time feature, and in a process of training a logistic regression model sequentially using the sorted data records, acquiring a sequence feature corresponding to the current data record based on a parameter item related to a model parameter of the logistic regression model as the generated feature related to each data record; and
in response to the data set comprising multiple time features, determining the feature engineering strategy for the data set as: generating, for each data record, the feature related to each data record by combing the multiple time features in pairs and then subtracting them.

8. The system of claim 1, wherein the training of the machine learning model using the constructed machine learning sample based on the automatically obtained hyper-parameter values comprises:
using a part of all the constructed machine learning samples as a training sample set;
generating multiple sets of hyper-parameter values of hyper-parameters that affect the training of the machine learning model by automatically using different hyper-parameter generation strategies according to a number of training samples comprised in the training sample set;
training multiple machine learning models by using the constructed machine learning sample based on each set of hyper-parameter values among the multiple sets of hyper-parameter values, respectively; and
selecting several machine learning models with top-ranked model effects among the multiple trained machine learning models, and fusing the several selected machine learning models through a predetermined model fusion strategy to determine a finally trained machine learning model.

9. The system of claim 8, wherein the generating of multiple sets of hyper-parameter values of the hyper-parameters that affect the training of the machine learning model by automatically using the different hyper-parameter generation strategies according to the number of training samples comprised in the training sample set comprises:
in response to the number of the training samples comprised in the training sample set being less than or equal to a preset threshold, generating the multiple sets of hyper-parameter values of the hyper-parameters by: randomly generating the multiple sets of hyper-parameter values of the hyper-parameters within a range of the hyper-parameter values corresponding to the number of the training samples, or pre-defining hyper-parameter values of partial hyper-parameters among the hyper-parameters, and randomly generating, for remaining hyper-parameters, multiple sets of hyper-parameter values of the remaining hyper-parameters within a range of the hyper-parameter values corresponding to the number of the training samples; and
in response to the number of the training samples comprised in the training sample set being greater than the preset threshold, generating the multiple sets of hyper-parameter values of the hyper-parameters by: pre-defining hyper-parameter values of partial hyper-parameters among the hyper-parameters, and generating, for remaining hyper-parameters, multiple sets of hyper-parameter values of the remaining hyper-parameters by a combination method in which a method of randomly generating the hyper-parameter values within the range of the hyper-parameter values corresponding to the number of the training samples and a method of generating hyper-parameter values using a Bayesian optimization model are combined, wherein the Bayesian optimization model is constructed to reflect relationship between a hyper-parameter value and a model effect corresponding thereto.

10. The system of claim 9, wherein the generating, for the remaining hyper-parameters, of the multiple sets of hyper-parameter values of the remaining hyper-parameters by the combination method comprises:
constructing a sub training sample set by sampling the training samples in the training sample set;
randomly generating, for the remaining hyper-parameters, predetermined sets of initial hyper-parameter values of the remaining hyper-parameters within a range of the hyper-parameter values corresponding to a number of the training samples comprised in the sub training sample set, train the machine learning model using the sub training sample set based on each set of hyper-parameter values constituted by the pre-defined values of the partial hyper-parameters and each set of the initial hyper-parameter values of the remaining hyper-parameters, and verifying a model effect of the trained machine learning model to obtain a model effect corresponding to the each set of hyper-parameter values;
establishing the Bayesian optimization model according to the each set of hyper-parameter values and the model effect corresponding thereto; and
continuously determining a number of sets of hyper-parameter values that needs to be generated currently for the remaining hyper-parameters, generating one part of the number of sets using the Bayesian optimization model, and randomly generating another part of the number of sets within the range of the hyper-parameter values corresponding to the number of the training samples comprised in the sub training sample set.

11. The system of claim 11, wherein the constructing of the sub training sample set by sampling the training samples in the training sample set comprises: performing multiple times of sampling for the training samples in the training sample set to construct multiple sub training sample sets with different numbers of training samples, wherein among the multiple times of sampling, the sub training sample set obtained from latter sampling comprises more training samples than the sub training sample set obtained from previous sampling; and
wherein the generating, for the remaining hyper-parameters, of the multiple sets of hyper-parameter values of the remaining hyper-parameters by the combination method further comprises:
whenever new hyper-parameter values of the remaining hyper-parameters are generated according to the combination method, training the machine learning model using the sub training sample set obtained from first sampling, based on each set of hyper-parameter values constituted by the pre-defined hyper-parameter values of the partial hyper-parameters and the generated new hyper-parameter values;
selecting multiple sets of hyper-parameter values corresponding to top-ranked model effects among all the sets of hyper-parameter values used when training the machine learning model using the sub training sample set obtained from the previous sampling, as all sets of hyper-parameter values to be used when training the machine learning model using the sub training sample set obtained from next sampling; and
in response to a predetermined condition being satisfied, stopping sampling, and using multiple sets of hyper-parameter values corresponding to top-ranked model effects among all the sets of hyper-parameter values used when training the machine learning model using the sub training sample set obtained from the last sampling, as all sets of hyper-parameter values of the hyper-parameters that affect the training of the machine learning model.

12. The system of claim 10, wherein the constructing of the sub training sample set comprises: constructing the sub training sample set by performing sub-sampling based on density for the training samples in the training sample set.

13. The system of claim 11, wherein the constructing of the sub training sample set by performing the sub-sampling based on density for the training samples in the training sample set comprises:
reducing dimensionality of the training samples in the training sample set to another dimension space; and
constructing the sub training sample set by sampling the training samples according to labels of the training samples and distribution density of the training samples in the training sample set in the another dimension space.

14. The system of claim 13, wherein the reducing of the dimensionality of the training samples in the training sample set to the another dimension space comprises: mapping each training sample in the training sample set to a sample point on a two-dimensional plane; and
wherein the constructing of the sub training sample set by sampling the training samples according to the labels of the training samples and the distribution density of the training samples in the training sample set in the another dimension space comprises:
classifying all sample points on the two-dimensional plane into positive sample point sets and negative sample point sets according to whether the training sample is a positive sample or a negative sample; and
regarding each point set among the positive sample point sets and the negative sample point sets, sampling the sample points in accordance with a set sampling ratio according to distribution density of the sample points in the point set, and using a set constituted by training samples corresponding to sampled sample points as the sub training sample set.

15. The system of claim 14, wherein the sampling of the sample points in accordance with the set sampling ratio according to the distribution density of the sample points in the point set comprises:
determining a planar region covering all the sample points in the point set, according to a maximum value and a minimum value of abscissas and ordinates of all the sample points in the point set on the two-dimensional plane;
dividing the determined planar region into multiple sub-regions;
counting a number of sub-regions where the sample points fall;
in response to the number of sub-regions where the sample points fall being greater than a preset number, randomly sampling in accordance with the set sampling ratio in each sub-region; and
in response to the number of sub-regions where the sample points fall being less than or equal to the preset number, increasing the number of the divided sub-regions until the number of sub-regions where the sample points fall is greater than the preset number, and then randomly sampling in accordance with the set sampling ratio in each sub-region.

16. The system of claim 10, wherein the generating, for the remaining hyper-parameters, of the multiple sets of hyper-parameter values of the remaining hyper-parameters by the combination method further comprises:
after the Bayesian optimization model is established, whenever a new hyper-parameter value and the model effect corresponding thereto are obtained, using them to update the Bayesian optimization model.

17. The system of claim 10, wherein in the case where the number of the training samples in the training sample set is greater than the preset threshold, the determining of the finally trained machine learning model comprises:
acquiring several sets of hyper-parameter values used when training the several machine learning models with the top-ranked model effects;
performing secondary training on the machine learning models using the training sample set based on each set of hyper-parameter values of the several sets of hyper-parameter values; and
fusing the several machine learning models on which the secondary training is performed through the predetermined model fusion strategy to determine the finally trained machine learning model.

18. The system of claim 8, wherein the determining of the finally trained machine learning model comprises:
using the several machine learning models as an initial model candidate set; and
for the initial model candidate set, performing following model combination operations:
combining a machine learning model with a best model effect among the several machine learning models with machine learning models in the initial model candidate set, respectively,
and calculating the model effect of a respective combined machine learning model group;
determining whether the model effect of the respective combined machine learning model group is improved compared with the best model effect before the combination; in response to the model effect of the respective combined machine learning model group being not improved compared with the best model effect before the combination, determining the machine learning model with the best model effect before the combination as a final machine learning model; in response to the model effect of the respective combined machine learning model group being improved compared with the best model effect before the combination,
adding the combined machine learning model group with the best model effect after the combination to the initial model candidate set to constitute a current model candidate set;
repeating, for the current model candidate set, model combination operations the same as the model combination operations performed for the initial model candidate set for a predetermined number of times, and selecting a machine learning model combination with the best model effect in the finally generated current model candidate set; and
determining respective weights of the several machine learning models when the models are fused, according to the number of each machine learning model in the several machine learning models comprised in the machine learning model combination.

19. The system of claim 18, wherein the determining of the finally trained machine learning model further comprises:
acquiring several sets of hyper-parameter values used when training the several machine learning models with the top-ranked model effects, and a number of rounds of training the machine learning model using the training sample set based on each set of hyper-parameter values of the several sets of hyper-parameter values, respectively;
training the machine learning model for the corresponding number of rounds using all the constructed machine learning samples based on each set of hyper-parameter values, to obtain several re-trained machine learning models; and
fusing the several re-trained machine learning models according to the determined respective weights when the models are fused, to obtain the finally trained machine learning model.

20. The system of claim 7, wherein the machine learning model is a neural network model or a logistic regression model.

21. The system of claim 10, wherein the generating of the one part of the number of sets using the Bayesian optimization model and the randomly generating of the another part of the number of sets are performed in parallel.

22. The system of any one of claims 1 to 21, wherein the data set relates to at least one of image data, voice data, text data and service data.

23. A method, executed by at least one computing device, for automatically training a machine learning model comprises:
acquiring a data set comprising multiple data records;
determining a feature engineering strategy for the data set through meta-learning;
generating features related to each data record in the data set using the determined feature engineering strategy;
constructing a machine learning sample at least based on the generated features; and
train the machine learning model using the constructed machine learning sample based on automatically obtained hyper-parameter values.

24. The method of claim 23, wherein the determining of the feature engineering strategy for the data set through the meta-learning comprises:
analyzing the data set to obtain a meta feature that reflects overall characteristics of the data set; and
determining the feature engineering strategy for the data set based on the obtained meta feature.

25. The method of claim 24, wherein the determining of the feature engineering strategy for the data set based on the obtained meta feature comprises:
automatically determining the feature engineering strategy for the data set based on the obtained meta feature according to correspondence relationship between the meta feature and the feature engineering strategy; or
determining the feature engineering strategy for the data set using another machine learning model based on the obtained meta feature.

26. The method of claim 25, wherein the determining of the feature engineering strategy for the data set using the another machine learning model comprises:
determining a historical data set that is similar to the data set and has a corresponding model training result using a clustering model as the another machine learning model based on the obtained meta feature, and determining a feature engineering strategy corresponding to the historical data set as the feature engineering strategy for the data set; or
inputting a prediction sample constituted based on the obtained meta feature to a prediction model as the another machine learning model, and using a prediction result of the prediction model for the prediction sample as the feature engineering strategy for the data set, wherein the prediction model is pre-trained to predict the feature engineering strategy corresponding to the meta feature based on the meta feature.

27. The method of claim 24, wherein the analyzing of the data set to obtain the meta feature that reflects the overall characteristics of the data set comprises:
analyzing the data set to obtain statistic information regarding at least one of a number of data records comprised in the data set, types of features comprised in the data record, a number of the features, and values of the features, as the meta feature.

28. The method of claim 27, wherein the meta feature comprises at least one of: the number of the data records comprised in the data set, a number of discrete features comprised in the data record, a number of consecutive features comprised in the data record, whether there is a time feature in the data record, a number of time features comprised in the data record, a filling degree of each discrete feature, a filling degree of each consecutive feature, an average filling degree of all the discrete features, an average filling degree of all the consecutive features, a mean, variance, median, maximum or minimum value of respective consecutive feature values, and a number of different values of respective discrete features.

29. The method of claim 28, wherein the determining of the feature engineering strategy for the data set based on the obtained meta feature comprises at least one of following operations:
in response to the discrete features being stronger than the consecutive features in distribution, determining the feature engineering strategy for the data set as: discretizing the consecutive features to obtain discretization features, and searching Cartesian product combinations of original discrete features and the discretization features for a discrete feature combination that is beneficial to a training effect of the model, as the generated feature related to each data record;
in response to the consecutive features being stronger than the discrete features in distribution, determining the feature engineering strategy for the data set as: training a gradient boosting decision tree model using the data set, and using a serial number of a leaf node of each decision tree where the sample constituted based on each data record falls as the generated feature related to each data record;
in response to there being the time feature in the data set, determining the feature engineering strategy for the data set as: sorting the multiple data records according to the time feature, and in a process of training a logistic regression model sequentially using the sorted data records, acquiring a sequence feature corresponding to the current data record based on a parameter item related to a model parameter of the logistic regression model as the generated feature related to each data record; and
in response to the data set comprising multiple time features, determining the feature engineering strategy for the data set as: generating, for each data record, the feature related to each data record by combing the multiple time features in pairs and then subtracting them.

30. The method of claim 23, wherein the training of the machine learning model using the constructed machine learning sample based on the automatically obtained hyper-parameter values comprises:
using a part of all the constructed machine learning samples as a training sample set;
generating multiple sets of hyper-parameter values of hyper-parameters that affect the training of the machine learning model by automatically using different hyper-parameter generation strategies according to a number of training samples comprised in the training sample set;
training multiple machine learning models by using the constructed machine learning sample based on each set of hyper-parameter values among the multiple sets of hyper-parameter values, respectively; and
selecting several machine learning models with top-ranked model effects among the multiple trained machine learning models, and fusing the several selected machine learning models through a predetermined model fusion strategy to determine a finally trained machine learning model.

31. The method of claim 30, wherein the generating of multiple sets of hyper-parameter values of the hyper-parameters that affect the training of the machine learning model by automatically using the different hyper-parameter generation strategies according to the number of training samples comprised in the training sample set comprises:
in response to the number of the training samples comprised in the training sample set being less than or equal to a preset threshold, generating the multiple sets of hyper-parameter values of the hyper-parameters by: randomly generating the multiple sets of hyper-parameter values of the hyper-parameters within a range of the hyper-parameter values corresponding to the number of the training samples, or pre-defining hyper-parameter values of partial hyper-parameters among the hyper-parameters, and randomly generating multiple sets of hyper-parameter values of remaining hyper-parameters within the range of the hyper-parameter values corresponding to the number of the training samples for the remaining hyper-parameters; and
in response to the number of the training samples comprised in the training sample set being greater than the preset threshold, generating the multiple sets of hyper-parameter values of the hyper-parameters by: pre-defining hyper-parameter values of partial hyper-parameters among the hyper-parameters, and generating, for remaining hyper-parameters, multiple sets of hyper-parameter values of the remaining hyper-parameters by a combination method in which a method of randomly generating the hyper-parameter values within the range of the hyper-parameter values corresponding to the number of the training samples and a method of generating hyper-parameter values using a Bayesian optimization model are combined, wherein the Bayesian optimization model is constructed to reflect relationship between a hyper-parameter value and a model effect corresponding thereto.

32. The method of claim 31, wherein the generating, for the remaining hyper-parameters, of the multiple sets of hyper-parameter values of the remaining hyper-parameters by the combination method comprises:
constructing a sub training sample set by sampling the training samples in the training sample set;
randomly generating, for the remaining hyper-parameters, predetermined sets of initial hyper-parameter values of the remaining hyper-parameters within the range of the hyper-parameter values corresponding to a number of training samples comprised in the sub training sample set, train the machine learning model using the sub training sample set based on each set of hyper-parameter values constituted by the pre-defined values of the partial hyper-parameters and each set of the initial hyper-parameter values of the remaining hyper-parameters, and verifying a model effect of the trained machine learning model to obtain a model effect corresponding to the each set of hyper-parameter values;
establishing the Bayesian optimization model according to the each set of hyper-parameter values and the model effect corresponding thereto; and
continuously determining a number of sets of hyper-parameter values that needs to be generated currently for the remaining hyper-parameters, generating one part of the number of sets using the Bayesian optimization model, and randomly generating another part of the number of sets within the range of the hyper-parameter values corresponding to the number of the training samples comprised in the sub training sample set.

33. The method of claim 32, wherein the constructing of the sub training sample set by sampling the training samples in the training sample set comprises: performing multiple times of sampling for the training samples in the training sample set to construct multiple sub training sample sets with different numbers of training samples, wherein among the multiple times of sampling, the sub training sample set obtained from the latter sampling comprises more training samples than the sub training sample set obtained from the previous sampling; and
wherein the generating, for the remaining hyper-parameters, of the multiple sets of hyper-parameter values of the remaining hyper-parameters by the combination method further comprises:
whenever new hyper-parameter values of the remaining hyper-parameters are generated according to the combination method, training the machine learning model using the sub training sample set obtained from the first sampling, based on each set of hyper-parameter values constituted by the pre-defined hyper-parameter values of the partial hyper-parameters and the generated new hyper-parameter values;
selecting multiple sets of hyper-parameter values corresponding to top-ranked model effects among all the sets of hyper-parameter values used when training the machine learning model using the sub training sample set obtained from the previous sampling, as all sets of hyper-parameter values to be used when training the machine learning model using the sub training sample set obtained from the next sampling; and
in response to a predetermined condition being satisfied, stopping sampling, and using multiple sets of hyper-parameter values corresponding to top-ranked model effects among all the sets of hyper-parameter values used when training the machine learning model using the sub training sample set obtained from the last sampling, as all sets of hyper-parameter values of the hyper-parameters that affect the training of the machine learning model.

34. The method of claim 32, wherein the constructing of the sub training sample set comprises: constructing the sub training sample set by performing sub-sampling based on density for the training samples in the training sample set.

35. The method of claim 34, wherein the constructing of the sub training sample set by performing sub-sampling based on density for the training samples in the training sample set comprises:
reducing dimensionality of the training samples in the training sample set to another dimension space; and
constructing the sub training sample set by sampling the training samples according to labels of the training samples and distribution density of the training samples in the training sample set in the another dimension space.

36. The method of claim 35, wherein the reducing of the dimensionality of the training samples in the training sample set to the another dimension space comprises: mapping each training sample in the training sample set to a sample point on a two-dimensional plane; and
wherein the constructing of the sub training sample set by sampling the training samples according to the labels of the training samples and the distribution density of the training samples in the training sample set in the another dimension space comprises:
classifying all sample points on the two-dimensional plane into positive sample point sets and negative sample point sets according to whether the training sample is a positive sample or a negative sample; and
regarding each point set among the positive sample point sets and the negative sample point sets, sampling the sample points in accordance with a set sampling ratio according to distribution density of the sample points in the point set, and using a set constituted by training samples corresponding to the sampled sample points as the sub training sample set.

37. The method of claim 36, wherein the sampling of the sample points in accordance with the set sampling ratio according to the distribution density of the sample points in the point set comprises:
determining a planar region covering all the sample points in the point set, according to a maximum value and a minimum value of abscissas and ordinates of all the sample points in the point set on the two-dimensional plane;
dividing the determined planar region into multiple sub-regions;
counting a number of sub-regions where the sample points fall;
in response to the number of sub-regions where the sample points fall being greater than a preset number, randomly sampling in accordance with the set sampling ratio in each sub-region; and
in response to the number of sub-regions where the sample points fall being less than or equal to the preset number, increasing the number of the divided sub-regions until the number of sub-regions where the sample points fall is greater than the preset number, and then randomly sampling in accordance with the set sampling ratio in each sub-region.

38. The method of claim 32, wherein the generating, for the remaining hyper-parameters, of the multiple sets of hyper-parameter values of the remaining hyper-parameters by the combination method further comprises:
after the Bayesian optimization model is established, whenever a new hyper-parameter value and a model effect corresponding thereto are obtained, using them to update the Bayesian optimization model.

39. The method of claim 32, wherein in the case where the number of the training samples in the training sample set is greater than the preset threshold, the determining of the finally trained machine learning model comprises:
acquiring several sets of hyper-parameter values used when training the several machine learning models with the top-ranked model effects;
performing secondary training on the machine learning models using the training sample set based on each set of hyper-parameter values of the several sets of hyper-parameter values; and
fusing the several machine learning models on which the secondary training is performed through the predetermined model fusion strategy to determine the finally trained machine learning model.

40. The method of claim 30, wherein the determining of the finally trained machine learning model comprises:
using the several machine learning models as an initial model candidate set; and
for the initial model candidate set, performing following model combination operations:
combining a machine learning model with a best model effect among the several machine learning models with machine learning models in the initial model candidate set, respectively,
and calculating the model effect of a respective combined machine learning model group;
determining whether the model effect of the respective combined machine learning model group is improved compared with the best model effect before the combination; in response to the model effect of the respective combined machine learning model group being not improved compared with the best model effect before the combination, determining the machine learning model with the best model effect before the combination as a final machine learning model; in response to the model effect of the respective combined machine learning model group being improved compared with the best model effect before the combination,
adding the combined machine learning model group with the best model effect after the combination to the initial model selection set to constitute a current model candidate set;
repeating, for the current model candidate set, model combination operations the same as the model combination operations performed for the initial model candidate set for a predetermined number of times, and selecting a machine learning model combination with the best model effect in the finally generated current model candidate set; and
determining respective weights of the several machine learning models when the models are fused, according to the number of each machine learning model in the several machine learning models comprised in the machine learning model combination.

41. The method of claim 40, wherein the determining of the finally trained machine learning model further comprises:
acquiring several sets of hyper-parameter values used when training the several machine learning models with the top-ranked model effects, and a number of rounds of training the machine learning model using the training sample set based on each set of hyper-parameter values of the several sets of hyper-parameter values, respectively;
training the machine learning model for the corresponding number of rounds using all the constructed machine learning samples based on each set of hyper-parameter values, to obtain several re-trained machine learning models; and
fusing the several re-trained machine learning models according to the determined respective weights when the models are fused, to obtain the finally trained machine learning model.

42. The method of claim 29, wherein the machine learning model is a neural network model or a logistic regression model.

43. The method of claim 32, wherein the generating of the one part of the number of sets using the Bayesian optimization model and the randomly generating of the another part of the number of sets are performed in parallel.

44. The method of any one of claims 23 to 43, wherein the data set relates to at least one of image data, voice data, text data and service data.

45. A computer readable storage medium storing instructions, wherein the instructions, when executed by at least one computing device, cause the at least one computing device to execute the method of any one of claims 23 to 44.

46. A system for automatically training a machine learning model, comprising:
a data set acquisition device configured to acquire a data set comprising multiple data records;
a feature engineering strategy determination device configured to determine a feature engineering strategy for the data set through meta-learning;
a feature generation device configured to generate features related to each data record in the data set using the determined feature engineering strategy;
a sample construction device configured to construct a machine learning sample at least based on the generated features; and
a training device configured to train the machine learning model using the constructed machine learning sample, based on automatically obtained hyper-parameter values.
